# EUROPEAN PATENT APPLICATION

(11) **EP 4 195 737 A1**
(43) Date of publication of application: **14.06.2023**
(21) Application number: 20948314.8
(22) Date of filing: 07.08.2020
(51) Int. Cl.: H04W 16/28, H04W 76/19

(54) **TERMINAL, BASE STATION DEVICE, AND BEAM FAULT RECOVERY METHOD**

(71) Applicant: NTT DOCOMO, INC., Tokyo 100-6150 (JP)
(72) Inventor: SHIBAIKE, Naoya, Tokyo 100-6150 (JP); MATSUMURA, Yuki, Tokyo 100-6150 (JP); HARADA, Hiroki, Tokyo 100-6150 (JP); OKANO, Mayuko, Tokyo 100-6150 (JP); NAGATA, Satoshi, Tokyo 100-6150 (JP); WANG, Jing, Beijing, 100190 (CN)
(74) Representative: Hoffmann Eitle
(86) International application number: PCT/JP2020/030511
(87) International publication number: WO 2022/030020

(57) **Abstract**

A terminal includes: a receiving unit which performs signal reception with the same beam in the plurality of component carriers; and a control unit which updates a QCL in a plurality of component carriers based on a new beam selected by a beam failure recovery procedure in a certain component carrier among the plurality of component carriers.

## Description

### TECHNICAL FIELD

The present invention relates to a terminal and a base station apparatus in a radio communication system.

### BACKGROUND ART

In a new radio (NR) (also referred to as "5G"), which is a successor system to long term evolution (LTE), as the requirements, techniques that satisfy a large capacity system, a high data transmission speed, a low delay, and simultaneous connection of a number of terminals, a low cost, power saving, and the like have been considered (for example, Non-Patent Document 1). Further, in the NR, it has been considered to use a high frequency band such as 52.6 to 114.25 GH.

Further, in the NR system, in order to expand the frequency band, use of a frequency band (unlicensed band) different from the frequency band (licensed band) licensed by a telecommunication carrier (operator), an unlicensed carrier (unlicensed band), and an unlicensed CC (also referred to as an unlicensed CC) has been supported.

### CITATION LIST

### NON-PATENT DOCUMENT

Non-Patent Document 1: 3GPP TS 38.300 V15.9.0 (2020-03)
Non-Patent Document 2: 3GPP TS 38.331 V15.9.0 (2020-03)
Non-Patent Document 3: 3GPP TS 38.213 V15.9.0 (2020-03)
Non-Patent Document 4: 3GPP TS 38.321 V15.9.0 (2020-07)

### DISCLOSURE OF THE INVENTION

### PROBLEM TO BE SOLVED BY THE INVENTION

In the NR, various functions for failure detection and recovery of radio link are regulated (for example, Non-Patent Documents 2 to 4). Further, in the NR, various functions for failure detection and recovery of beam are also regulated (for example, Non-Patent Documents 2 to 4).

However, there is a possibility that a terminal that complies with the existing NR regulations assuming a frequency band of up to 52.6 GHz cannot appropriately perform failure detection and recovery of radio link/beam in a high frequency band such as 52.6 to 114.25 GH.

The invention has been made in view of the above points, and an object of the invention is to provide a technique that enables a terminal to appropriately perform failure detection and recovery of communication in a high frequency band in a radio communication system.

### MEANS FOR SOLVING PROBLEM

According to the disclosed technology, there is provided a terminal including:
a receiving unit which receives signals with the same beam in a plurality of component carriers; and
a control unit which updates a QCL in the plurality of component carriers based on a new beam selected by a beam failure recovery procedure in a certain component carrier among the plurality of component carriers.

### EFFECT OF THE INVENTION

According to the disclosed technology, there is provided a technology that enables a terminal to appropriately perform failure detection and recovery of communication in a high frequency band in a radio communication system.

### BRIEF DESCRIPTION OF DRAWINGS

[Fig. 1] Fig. 1 is a diagram illustrating a radio communication system according to an embodiment of the invention;
[Fig. 2] Fig. 2 is a diagram illustrating the radio communication system according to the embodiment of the invention;
[Fig. 3] Fig. 3 is a diagram illustrating an example of a band;
[Fig. 4] Fig. 4 is a diagram illustrating a relationship between an SCS and a symbol length;
[Fig. 5] Fig. 5 is a diagram illustrating a basic procedure example according to the embodiment of the invention;
[Fig. 6] Fig. 6 is a diagram illustrating a procedure example of RLM/RLF;
[Fig. 7] Fig. 7 is a diagram illustrating a new timer;
[Fig. 8] Fig. 8 is a diagram illustrating Rel-15 BFR;
[Fig. 9] Fig. 9 is a diagram illustrating Rel-16 BFR;
[Fig. 10] Fig. 10 is a diagram illustrating a transmission status of CSI-RS/SSB when performing LBT;
[Fig. 11] Fig. 11 is a diagram illustrating timing of PDCCH monitoring at the time of a BFR;
[Fig. 12] Fig. 12 is a diagram illustrating timing of QCL updating;
[Fig. 13] Fig. 13 is a diagram illustrating Multi-CC BFR;
[Fig. 14] Fig. 14 is a diagram illustrating an example of MAC CE for performing beam reporting;
[Fig. 15] Fig. 15 is a diagram illustrating an example of a PRACH sequence for performing beam reporting;
[Fig. 16] Fig. 16 is a diagram illustrating a two-step RACH procedure;
[Fig. 17] Fig. 17 is a diagram illustrating an example of a functional configuration of a base station apparatus 10 according to the embodiment of the invention;
[Fig. 18] Fig. 18 is a diagram illustrating an example of a functional configuration of a terminal 20 according to the embodiment of the invention; and
[Fig. 19] Fig. 19 is a diagram illustrating an example of a hardware configuration of the base station apparatus 10 or the terminal 20 according to the embodiment of the invention.

### BEST MODE(S) FOR CARRYING OUT THE INVENTION

Hereinafter, embodiments of the invention will be described with reference to the drawings. It is noted that the embodiments described below are examples, and the embodiments to which the invention is applied are not limited to the following embodiments.

Existing technology is appropriately used in the operation of a radio communication system according to the embodiment of the invention. The existing technology is, for example, an existing NR. The radio communication system (base station apparatus 10 and terminal 20) in the present embodiment basically operates according to existing regulations (for example, Non-Patent Documents 1 to 4 and specification of R-16). However, in order to solve the problem in the case of assuming the use of the high frequency band, the base station apparatus 10 and the terminal 20 also perform operations which are not in the existing regulations. In the description of Examples described later, the operations which are not in the existing regulations are mainly described. It is noted that the numerical values described below are all examples.

Further, in the embodiment of the invention, the duplex system may be a time division duplex (TDD) system, a frequency division duplex (FDD) system, or another system (for example, a flexible duplex system, or the like) may be used.

Further, in the embodiment of the invention, "set (configure)" of the radio parameter or the like may denote that a predetermined value is set in advance (pre-configured) or may denote that the radio parameter notified from the base station apparatus 10 or the terminal 20 is set.

### (System Configuration)

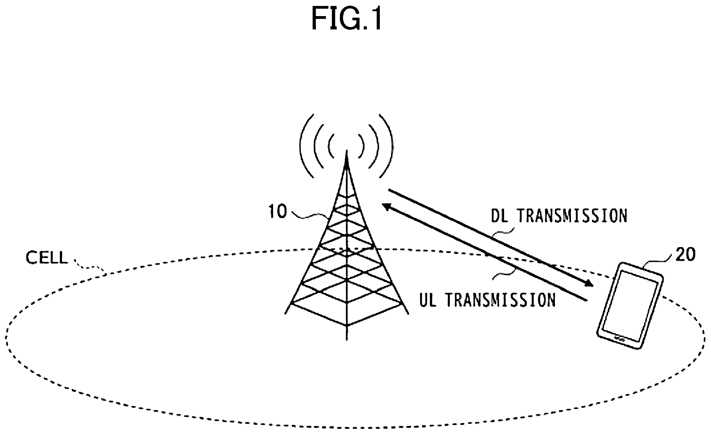

Fig. 1 is a diagram illustrating a radio communication system according to an embodiment of the invention. The radio communication system according to the embodiment of the invention includes a base station apparatus 10 and a terminal 20 as illustrated in Fig. 1. Although Fig. 1 illustrates one base station apparatus 10 and one terminal 20, this is an example, and a plurality of the components may be used.

The base station apparatus 10 is a communication device that provides one or more cells and performs radio communication with the terminal 20. Physical resources of the radio signal are defined in a time domain and a frequency domain.

An OFDM is used as a radio access method. In the frequency domain, subcarrier spacing (SCS) supports at least of 15 kHz, 30 kHz, 120 kHz, or 240 kHz. Further, regardless of the SCS, a resource block is configured with a predetermined number (for example, 12) of consecutive subcarriers.

The terminal 20 detects an SSB (SS/PBCH block) at the time of performing initial access and identifies the SCS in a PDCCH and a PDSCH based on a PBCH included in the SSB.

Further, in the time domain, a slot is configured with a plurality of OFDM symbols (for example, 14 regardless of the subcarrier spacing). Hereinafter, the OFDM symbol is referred to as a "symbol". A slot is a scheduling unit. Further, a subframe of an interval of 1 ms is defined, and a frame configured with 10 subframes is defined. It is noted that the number of symbols per slot is not limited to 14.

As illustrated in Fig. 1, the base station apparatus 10 transmits control information or data to the terminal 20 with a down link (DL) and receives the control information or the data from the terminal 20 with an up link (UL). Both the base station apparatus 10 and the terminal 20 can perform beam forming to transmit and receive signals. Further, both the base station apparatus 10 and the terminal 20 can apply multiple input multiple output (MIMO) communication to the DL or the UL. Further, both the base station apparatus 10 and the terminal 20 may communicate via a secondary cell (SCell) and a primary cell (PCell) by a carrier aggregation (CA) .

The terminal 20 is a communication device having a radio communication function such as a smartphone, a mobile phone, a tablet, a wearable terminal, and a communication module for machine-to-machine (M2M). As illustrated in Fig. 1, the terminal 20 uses various communication services provided by the radio communication system by receiving control information or data from the base station apparatus 10 by the DL and transmitting the control information or data to the base station apparatus 10 by the UL.

The terminal 20 can perform the carrier aggregation that bundles a plurality of cells (a plurality of component carriers (CCs)) and communicates with the base station apparatus 10. In the carrier aggregation, one primary cell (PCell) and one or more secondary cells (SCells) are used. Further, a PUCCH-SCell having a PUCCH may be used.

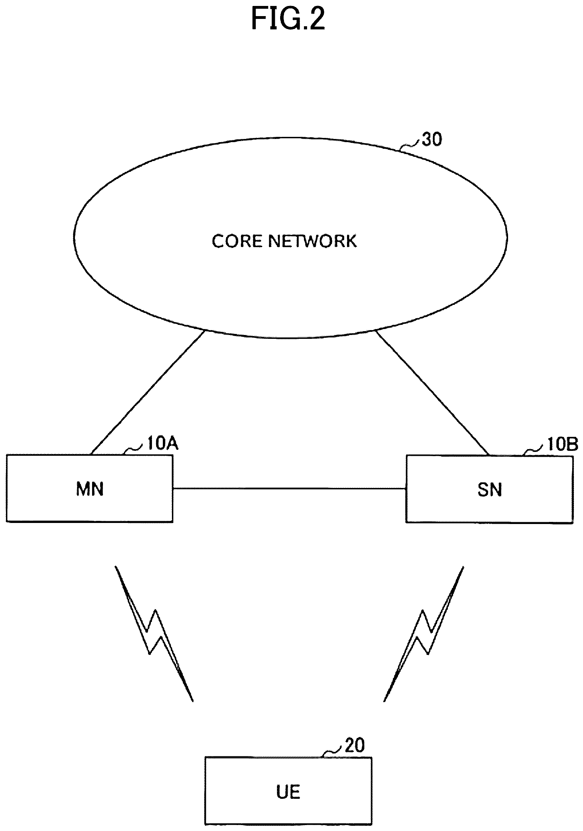

Fig. 2 illustrates a configuration example of the radio communication system when NR-dual connectivity (NR-DC) is executed. As illustrated in Fig. 2, a base station apparatus 10A serving as a master node (MN) and a base station apparatus 10B serving as a secondary node (SN) are provided. Each of the base station apparatus 10A and the base station apparatus 10B is connected to a core network. The terminal 20 communicates with both the base station apparatus 10A and the base station apparatus 10B.

A cell group provided by the base station apparatus 10A, which is an MN, is referred to as a master cell group (MCG), and a cell group provided by the base station apparatus 10B, which is an SN, is referred to as a secondary cell group (SCG). Further, in the DC, the MCG is configured with one PCell and one or more SCells, and the SCG is configured with one primary Scell (PSCell) and one or more SCells. It is noted that, in this specification, a component carrier (CC) and a cell may be used synonymously. Further, the PCell and the PSCell may be referred to as an SPCell.

In the radio communication system according to the present embodiment, when an unlicensed band is used, listen before talk (LBT) is executed. The base station apparatus 10 or the terminal 20 performs transmission when an LBT result is idle and does not perform the transmission when the LBT result is busy.

### (With Respect To Frequency Band)

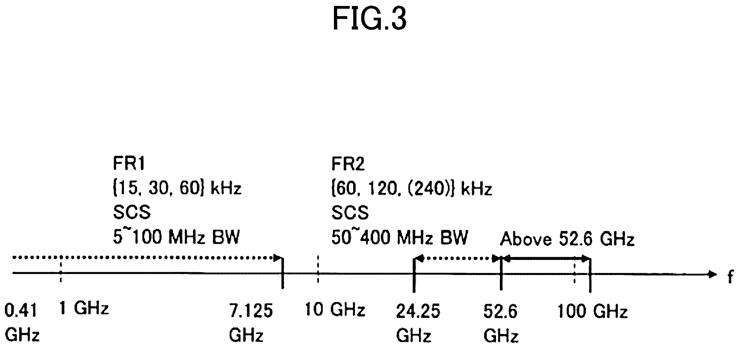

Fig. 3 illustrates an example of a frequency band used in an existing NR and a frequency band used in the radio communication system according to the present embodiment. There are two frequency bands (may be referred to as a frequency range) in the existing NRs of FR1 (0.41 GHz to 7.125) and FR2 (24.25 GHz to 52.6 GHz). As illustrated in Fig. 3, FR1 supports 15 kHz, 30 kHz, and 60 kHz as the SCS and supports 5 to 100 MHz as the bandwidth (BW). FR2 supports 60 kHz, 120 kHz, and 240 kHz (SSB only) as the SCS and supports 50 to 400 MHz as the bandwidth (BW).

In the radio communication system according to the present embodiment, it is assumed that a frequency band (for example, 52.6 GHz to 114.25 GHz) higher than 52.6 GHz, which is not used in the existing NR, is also used. This frequency band may be referred to as FR4.

Further, in the present embodiment, it is assumed that, as the frequency band is expanded as described above, an SCS wider than the existing SCS is used. For example, the SCS wider than 480 kHz or 480 kHz is used as the SSB and the SCS of the PDCCH/PDSCH.

### (Problem)

In the high frequency band, it is assumed that a large number of narrow beams are used to compensate for a large propagation loss. Further, as the SCS, the SCS (for example, 480 kHz, 960 kHz) wider than the SCS of the existing FR2 is used.

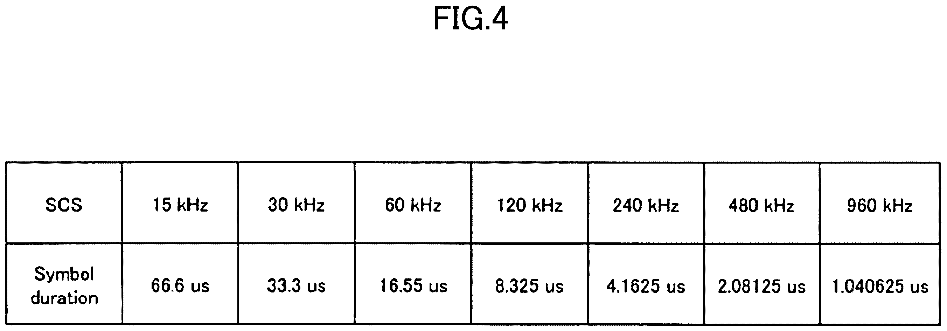

Fig. 4 is a diagram illustrating a relationship between the SCS and the symbol length (time length of the symbol). As illustrated in Fig. 4, as the SCS becomes wider, the symbol length (symbol time length) becomes shorter. Further, assuming that the number of symbols per slot is constant (that is, 14 symbols), as the SCS becomes wider, the slot length becomes shorter.

As described above, when the beam becomes narrow and numerous, and the SCS becomes wide, when the terminal 20 and the base station apparatus 10 operate according to the regulations of the related art, there is a possibility that the failure detection and the recovery of the radio link/beam cannot be performed appropriately.

Hereinafter, a technique for solving the above-mentioned problems and appropriately performing the failure detection and the recovery of the radio link/beam in a high frequency band by the terminal 20 and the base station apparatus 10 will be described.

### (Basic Operation)

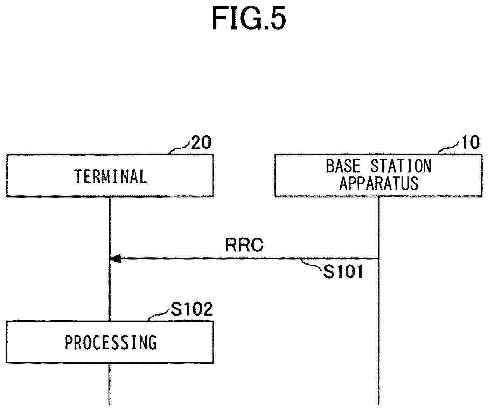

First, a basic operation example in the radio communication system of the present embodiment will be described with reference to Fig. 5.

In S101, the terminal 20 receives configuration information from the base station apparatus 10 by a RRC message. The configuration information is, for example, a timer, a threshold value, or the like used for RLM/RLF or BFD/BFR, which will be described later.

In S102, the terminal 20 executes processing related to the RLM/RLF, the BFD/BFR, and the like using the configuration information received in S101. It is noted that, in some cases, the process may be executed without using the configuration information.

Hereinafter, Examples 1 to 8 will be described as examples of specific processing operations in the radio communication system of the present embodiment. In Examples 1 to 8, any plurality of Examples can be combined and performed as long as there is no contradiction.

### (Example 1)

### <Basic Operation Example of Example 1>

In the radio communication system according to Example 1, when the terminal 20 (and the base station apparatus 10) performs radio link monitoring (RLM) and detects radio link failure (RLF), RRC connection re-establishment, and the like are executed.

In the RLM, counter values N310 and N311 and timers T310 and T311, which are threshold values for the number of times, are used. These parameters are received by the terminal 20 from the base station apparatus 20 by RRC signaling.

N310 is a threshold value for the number of consecutive out-of-sync indications, and when the number of consecutive out-of-sync indications reaches N310, the timer T310 is started.

T310 starts with the above trigger and stops when N311 consecutive in-sync indications are notified. When the T310 expires, for example, the RRC connection re-establishment is executed. The T311 starts at the start of the RRC connection re-establishment procedure in the cell reselection and stops when the cell reselection succeeds. When the T311 expires, the terminal 20 is in the RRC idle state.

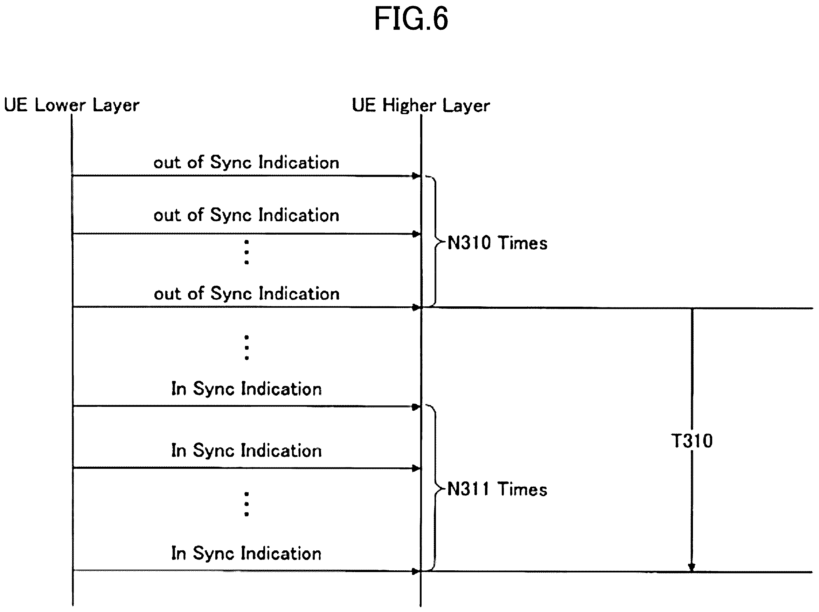

A procedure example of the RLM in the terminal 20 will be described with reference to Fig. 6. In the terminal 20, when the lower layer (for example, the functional unit of the physical layer) detects out-of-sync (radio link quality deterioration), the out-of-sync indication is notified to the upper layer (for example, the functional unit of the RRC).

When the terminal 20 detects that N310 times of consecutive out-of-sync indications have been notified from the lower layer to the upper layer, the terminal 20 starts the timer T310. The terminal 20 stops the T310 when it is detected that N311 times of consecutive in-sync indications (radio link normal notification) have been notified from the lower layer to the upper layer during the operation of the timer T310. When the T310 expires, it is determined that the RLF has occurred, and the RRC connection re-establishment procedure is executed.

The above-described in-sync indication is, for example, information defined as follows.

"Upon request from higher layers, the UE provides to higher layers the periodic CSI-RS configuration indexes and/or SS/PBCH block indexes from the set q1^{~} and the corresponding radio link quality measurements that are larger than or equal to Qin".

That is, the in-sync indication is an index of the P-CSI-RS obtained by a radio quality measurement value of a certain threshold value Qᵢₙ or more, or (may be and), or an index of the SS/PBCH block (hereinafter, in some cases, described as the SSB). Further, the index of the target P-CSI-RS and the target index of the SSB are those in the set of "q1~". The "q1~" are parameters notified from the base station apparatus 20 to the terminal 10 by the RRC signaling, for example, by a candidateBeamRSList for the radio link quality measurement. It is noted that the radio link quality may be RSRP or RSRQ.

The above-mentioned out-of-sync indication is defined by, for example, as follows.

"PHY in the UE provides an indication to higher layers when the radio link quality for all corresponding resource configurations in the set q0^{~} that the UE uses to assess the radio link quality is worse than the threshold Qout"

That is, the out-of-sync indication is information notified when the radio link quality of all resources in a set of "q0^{~}" used by the terminal 20 for the radio link quality evaluation is worse than a certain threshold Qₒᵤₜ. The "q0^{~}" is a set of indexes of the P-CSI-RS notified from the base station apparatus 20 to the terminal 10 by the RRC signaling by, for example, failureDetectionResources.

### <Problem of Example 1>

In the high frequency band that is assumed to be used in the radio communication system of the present embodiment, it is assumed that a larger number of narrower beams than the existing technology are used. In that case, it is assumed that consecutive out-of-sync indications and consecutive in-sync indications rarely occur, or consecutive out-of-sync indications and consecutive in-sync indications occur excessively frequently.

Then, when the existing counter values (N310, N311, and the like) and the existing timers (T310, T311, and the like) are used, it is assumed that the RLF cannot be detected appropriately. On the contrary, it is assumed that the RLF is detected too frequently. Contents of Example 1 for solving this problem Will be described in detail below as Example 1-1 and Example 1-2.

### <Example 1-1>

In Example 1-1, a new value not disclosed in the existing specification is used as the counter value (constant) used in order to determine the radio link quality. As specific examples, the following Examples 1-1-1 and 1-1-2 will be described.

### <Example 1-1-1>

In Example 1-1-1, a value larger than the value disclosed in the existing specification (for example, Non-Patent Document 2) can be allowed to be used as a value of N310. In addition to or instead of this, a value larger than the value disclosed in the existing specification (for example, Non-Patent Document 2) may be allowed to be used as a value of N311.

For example, {1, 2, 3, 4, 6, 8, 10, 20, 30, 40, 50} is included as candidate values for N310 in the RRC message (RLF-TimersAndConstants), and the RRC message including {1, 2, 3, 4, 6, 8, 10, 20, 30, 40, 50} is notified from the base station apparatus 10 to the terminal 20.

For example, since the frequency band of the serving cell is a high frequency band (frequency larger than a predetermined value), the terminal 20 selects 40 as a large value of the N310 among {1, 2, 3, 4, 6, 8, 10, 20, 30, 40, 50} and executes, for example, the procedure illustrated in Fig. 6 as N310 = 40.

Further, the base station apparatus 10 may store, for example, {1, 2, 3, 4, 6, 8, 10, 20, 30, 40, 50} as a set of candidate values of N310 that can be transmitted by the RRC message (RLF-TimersAndConstants), may select, for example, 40 among the candidate values, and may notify 40 to the terminal 20 with the RRC message (RRF-TimersAndConstants). The terminal 20 that has received N310 = 40 executes, for example, the procedure illustrated in Fig. 6 by using N310 = 40.

By using a value larger than a value of the related art, as a value of N310, it is possible to avoid the occurrence of "consecutive out-of-sync indications" excessively frequently.

Further, for example, {1, 2, 3, 4, 5, 6, 8, 10, 15, 20, 30} is included as a candidate value of N311 in the RRC message (RLF-TimersAndConstants), and the {1, 2, 3, 4, 5, 6, 8, 10, 15, 20, 30} is notified from the base station apparatus 10 to the terminal 20.

For example, since the frequency band of the serving cell is a high frequency band, the terminal 20 selects 20 as a large value of N311 among {1, 2, 3, 4, 5, 6, 8, 10, 15, 20, 30} and executes, for example, the procedure illustrated in Fig. 6 as N311 = 20.

Further, the base station apparatus 10 may store, for example, {1, 2, 3, 4, 5, 6, 8, 10, 15, 20, 30} as a set of candidate values of N311 that can be transmitted by the RRC message (for example, RLF-TimersAndConstants), may select, for example, 20 among the candidate values, and may notify 20 to the terminal 20 with the RRC message (RLF-TimersAndConstants). The terminal 20 that has received N311 = 20 executes, for example, the procedure illustrated in Fig. 6 by using N311 = 20.

By using a value larger than a value of the related art, as a value of N311, it is possible to avoid the occurrence of "consecutive in-sync indications" excessively frequently.

### <Example 1-1-2>

In Example 1-1-2, a new RRC message (herein, an RLF-TimersAndConstats-r17) is introduced, and a value larger than a value disclosed in an existing specification (for example, Non-Patent Document 2) can be allowed to be used as a value of N310 from the base station apparatus 20 to the terminal 10 by the RLF-TimersAndConstats-r17. In addition to or instead of this, a value larger than a value disclosed in an existing specification (for example, Non-Patent Document 2) can be allowed to be used as a value of N311 from the base station apparatus 20 to the terminal 10 by the RLF-TimersAndConstants-r17.

For example, {30, 40, 50} is included as candidate values of N310 in the RLF-TimersAndConstants-r17, and the RLF-TimersAndConstants-r17 including {30, 40, 50} is notified from the base station apparatus 10 to the terminal 20.

The terminal 20 selects 40 as a large N310 value among, for example, {30, 40, 50}, sets N310 = 40, and executes, for example, the procedure illustrated in Fig. 6.

Further, the base station apparatus 10 may store, for example, {30, 40, 50} as a set of candidate values of N310 that can be transmitted by the RLF-TimersAndConstants-r17, may select, for example, 40 among the candidate values, and may notify 40 to the terminal 20 with the RLF-TimersAndConstants-r17. The terminal 20 that has received N310 = 40 executes, for example, the procedure illustrated in Fig. 6 by using N310 = 40.

By using a value larger than a value of the related art, as a value of N310, it is possible to avoid the occurrence of "consecutive out-of-sync indications" excessively frequently.

Further, for example, {15, 20, 30} is included as a candidate value of N311 in the RLF-TimersAndConstants-r17, and the RLF-TimersAndConstats-r17 including {15, 20, 30} is notified from the base station apparatus 10 to the terminal 20.

The terminal 20 selects 20 as a large N311 value among, for example, {15, 20, 30}, sets N310 = 20, and executes, for example, the procedure illustrated in Fig. 6.

Further, the base station apparatus 10 may store, for example, {15, 20, 30} as a set of candidate values of N311 that can be transmitted by the RLF-TimersAndConstants-r17, may select, for example, 20 among the candidate values, and may notify 20 to the terminal 20 with the RLF-TimersAndConstants-r17. The terminal 20 that has received N311 = 20 executes, for example, the procedure illustrated in Fig. 6 by using N311 = 20.

By using a value larger than a value of the related art, as a value of N311, it is possible to avoid the occurrence of "consecutive in-sync indications" excessively frequently.

Whether or not the terminal 20 uses the new RRC message (new field) as described above may be set by an RRC configuration from the base station apparatus 10 to the terminal 20. Alternatively, whether or not the terminal 20 uses a new RRC message (new field) as described above may be determined by the carrier frequency or the SCS of the cell in which the terminal 20 is in service. For example, when the carrier frequency (or the SCS) is larger than the threshold, a new RRC message as described above is used.

### <Example 1-2>

Next, Example 1-2 will be described. In Example 1-2, the condition as a trigger for starting the timer of T310 is changed from the condition (the number of consecutive out-of-sync indications is N310 times) described with reference to Fig. 6 described above.

Further, in Example 1-2, the condition as a trigger for stopping the timer of the T310 is changed from the condition (the number of consecutive in-sync indications is N310 times) described with reference to Fig. 6 described above. As a specific example, the following Examples 1-2-1 to 1-2-4 will be described.

### <Example 1-2-1>

In Example 1-2-1, when the terminal 20 detects X times of out-of-sync indication in Y, T310 is started. Y is, for example, the number of detected in-sync indications. Further, Y may be a time length (for example, a time length in msec units). When Y is the time length, t304 may be used as a value of Y.

For example, when the terminal 20 detects Y times of in-sync indication, if it detects X times of out-of-sync indication, the terminal 20 starts T310. Further, for example, the terminal 20 starts T310 when X times of out-of-sync indication are detected in the time of Y msec.

Further, X may be a probability (%) with respect to Y. In this case, for example, when the terminal 20 detects Y times of in-sync indication and Z times of out-of-sync indication in a certain duration, if Z × 100/Y > X%, the terminal 20 starts T310.

In any of the above-mentioned types of X and Y, the values of X and Y are regulated by specification and the like, and the terminal 20 (and the base station apparatus 10) may store these values in advance, and the candidate values of X and Y (X and Y to be used by the terminal 20) may be set from the base station apparatus 10 to the terminal 20 by the RRC signaling or the MAC signaling.

When the candidate values of X and Y are set from the base station apparatus 10 to the terminal 20, for example, {1, 2, 3, 4, 5} is set as X (for example, the number of times of out-of-sync indication), and {5, 10, 20, 30} is set as Y (for example, the number of times of in-sync indication).

Further, when the candidate values of X and Y are set from the base station apparatus 10 to the terminal 20, the terminal 20 may select a value to be used by itself among the candidate values, and the MAC signaling or the DCI that specifies a value to be used may be notified from the base station apparatus 10 to the terminal 20.

By using the condition using X and Y as the trigger for starting T310 as described above, it is possible to avoid accidentally starting T310 (even though the deterioration of the radio link quality is not enough to start T310).

Whether or not the terminal 20 uses the new determination method using X and Y as described above may be set by the RRC configuration from the base station apparatus 10 to the terminal 20. Alternatively, whether or not the terminal 20 uses a new determination method using X and Y as described above may be determined by the carrier frequency or the SCS of the cell in which the terminal 20 is in service. For example, when the carrier frequency (or the SCS) is larger than the threshold value, the terminal 20 uses a new determination method using X and Y as described above.

### <Example 1-2-2>

In Example 1-2-2, in the condition as a trigger for starting the timer of T310, the counting method of out-of-sync indication is changed in the condition (the number of consecutive out-of-sync indications is N310 times) described with reference to Fig. 6 described above. The changed counting method may be used under the conditions (the number of consecutive out-of-sync indications is N310 times) described in Fig. 6 described above or may be used in Example 1-2-1.

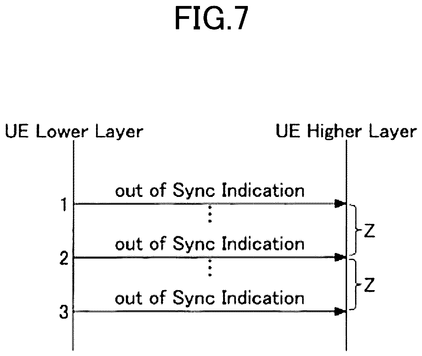

Example 1-2-2 will be described with reference to Fig. 7. As illustrated in Fig. 7, when the terminal 20 detects out-of-sync indication, the out-of-sync indication is detected in a time interval of from a detection time to Z (msec), the terminal 20 does not count the out-of-sync indication and counts the out-of-sync indication after Z (msec).

Accordingly, it is possible to avoid detecting the consecutive out-of-sync indications excessively frequently.

The values of Z are regulated in the specification or the like, the terminal 20 (and the base station apparatus 10) may store these values in advance, and the candidate values of Z (or Z to be used by the terminal 20) may be set from the base station apparatus 10 to the terminal 20 by the RRC signaling or the MAC signaling.

Further, when the candidate values of Z are configured for the terminal 20 from the base station apparatus 10, the terminal 20 may select a value to be used by itself among the candidate values, and the MAC signaling or the DCI that specifies a value to be used may be notified from the base station apparatus 10 to the terminal 20.

### <Example 1-2-3>

In Example 1-2-3, the condition as a trigger for stopping the timer of T310 is changed from the condition (the number of consecutive in-sync indications is N310 times) described with reference to Fig. 6 described above.

Specifically, when the terminal 20 detects X times of in-sync indication in Y, T311 is stopped. Y is, for example, the number of detected out-of-sync indications. Further, Y may be a time length (for example, a time length in msec units).

For example, when the terminal 20 detects Y times of out-of-sync indication, when the terminal detects X times of in-sync indication within the time, T311 is stopped. Further, for example, when the terminal 20 detects X times of in-sync indication within the time of Y msec, T311 is stopped.

Further, X may be a probability (%) with respect to Y. In this case, for example, when the terminal 20 detects Y times of out-of-sync indication and Z times of in-sync indication in a certain duration, if Z × 100/Y > X%, the terminal 20 stops T311.

In any of the above-mentioned types of X and Y, the values of X and Y are regulated in the specification or the like, the terminal 20 (and the base station apparatus 10) may store these values in advance, and the candidate values (X and Y to be used by the terminal 20) of X and Y may be set from the base station apparatus 10 to the terminal 20 by the RRC signaling or the MAC signaling.

Further, when the candidate values of X and Y are set from the base station apparatus 10 to the terminal 20, the terminal 20 may select a value to be used by itself among the candidate values, and the MAC signaling or the DCI that specifies a value to be used may be notified from the base station apparatus 10 to the terminal 20.

By using the condition using X and Y as the trigger for stopping T311 as described above, it is possible to avoid accidentally stopping T311 (even though the recovery of the radio link quality is not enough to stop T311).

Whether or not the terminal 20 uses the new determination method using X and Y as described above may be set by the RRC configuration from the base station apparatus 10 to the terminal 20. Alternatively, whether or not the terminal 20 uses a new determination method using X and Y as described above may be determined by the carrier frequency or the SCS of the cell in which the terminal 20 is in service. For example, when the carrier frequency (or the SCS) is larger than the threshold value, the terminal 20 uses a new determination method using X and Y as described above.

### <Example 1-2-4>

In Example 1-2-4, in the condition used as a trigger for stopping the timer of T311, the counting method of in-sync indication is changed in the condition (the number of consecutive in-sync indications is N311 times) described with reference to Fig. 6 described above. The changed counting method may be used under the conditions described with reference to Fig. 6 described above or may be used in Example 1-2-3.

Example 1-2-4 will be described with reference to Fig. 7. In Fig. 7, the out-of-sync indication will be described as being replaced with the in-sync indication.

When the terminal 20 detects the in-sync indication, even though the in-sync indication is detected in a time interval from the detection time to Z (msec), the terminal 20 does not count the in-sync indication and counts the in-sync indication after Z (msec).

Accordingly, it is possible to avoid detecting consecutive in-synchronization too frequently.

The values of Z are regulated in the specification or the like, the terminal 20 (and the base station apparatus 10) may store these values in advance, or the candidate values of Z (or Z to be used by the terminal 20) may be set from the base station apparatus 10 to the terminal 20 by the RRC signaling or the MAC signaling.

Further, when the candidate values of Z are set for the terminal 20 from the base station apparatus 10, the terminal 20 may select a value to be used by itself among the candidate values, and the MAC signaling or the DCI that specifies a value to be used may be notified from the base station apparatus 10 to the terminal 20.

### (Example 2)

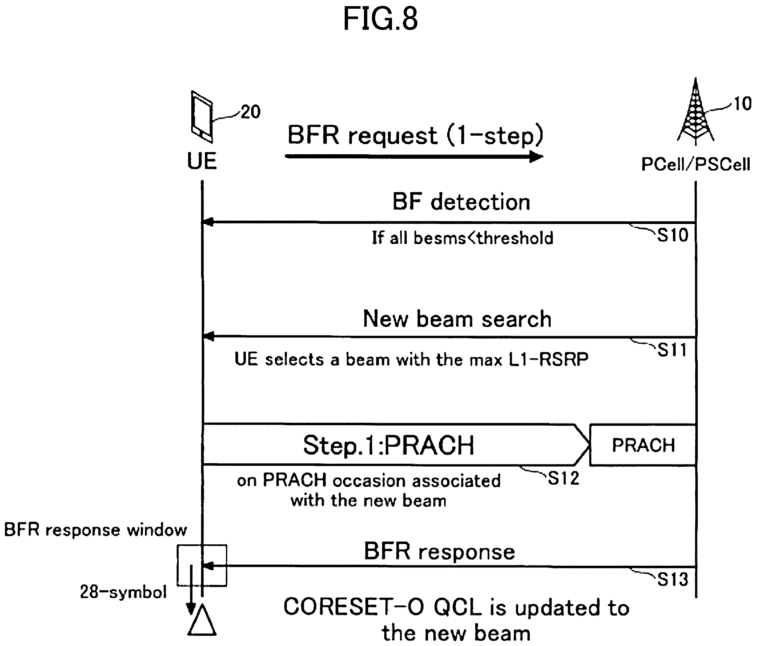

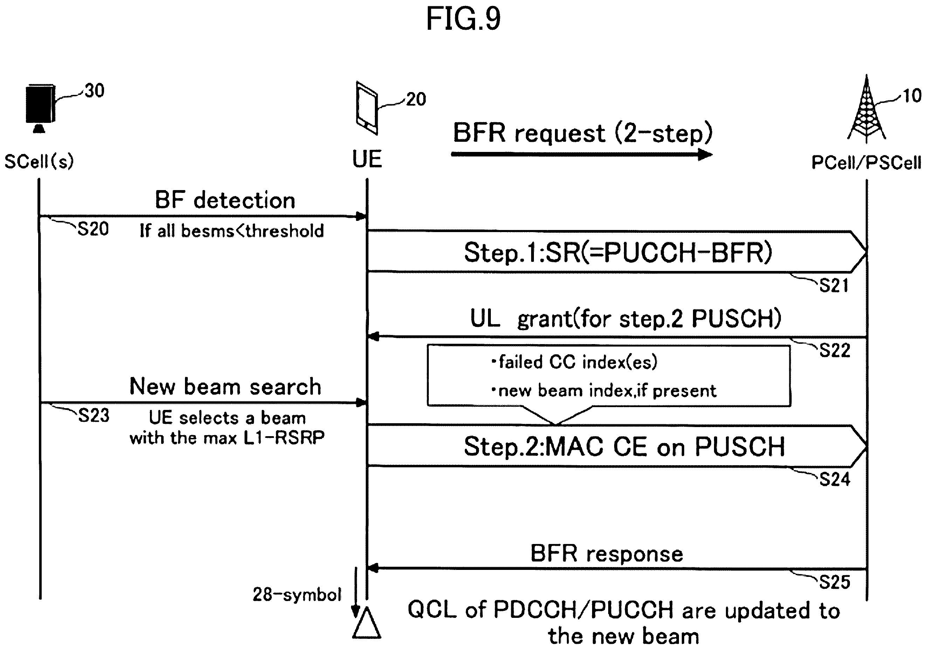

Next, Example 2 will be described. Example 2 is an example of a technique for performing beam failure detection (BFD) and performing beam failure recovery (BFR). First, a basic operation example in the BFD/BFR of the present embodiment will be described with reference to Figs. 8 and 9. It is noted that Figs. 8 and 9 illustrate basic operation examples common to all the examples relating to a BFR.

First, an operation example (BFR of R-15) of the BFD/BFR in the PCell/PSCell will be described with reference to Fig. 8.

In S10, the terminal 20 receives a reference signal (CSI-RS, the SSB, or both CSI-RS, and the SSB) transmitted from the base station apparatus 10 for each beam and measures the quality thereof (RSRP, RSRQ, and the like). Herein, when the number of times of determination that the quality of all the reference signals (that is, the beam) has deteriorated reaches a predetermined number of times, the terminal 20 searches for a new beam in S11.

In S10, all the reference signals are a set (failure detection resources) of reference signals (indexes) set from the base station apparatus 10 to the terminal 20 for measuring for detection of the beam failure, and these are referred to as q0. For example, 8 is set to this.

In S11, the terminal 20 measures the L1-RSRP of the candidate reference signal (candidateBeamRSList set from the base station apparatus 10 and referred to as q1) and selects the reference signal (beam) of which the L1-RSRP becomes at maximum as a new beam.

In S12, the terminal 12 transmits a PRACH (preamble) with a PRACH occasion corresponding to the selected new beam. The terminal 20 monitors a BFR response (PDCCH) with a BFR response window that starts after four slots.

After 28 symbols from the reception of the BFR response (PDCCH) in S13, the terminal 20 monitors the PDCCH with CORESET#0 by assuming that the PDCCH to be monitored with CORESET#0 has a QCL relationship with a new beam (reference signal).

Next, an operation example of the BFD/BFR for the SCell (BFR introduced in R-16) will be described with reference to Fig. 9. In Fig. 9, it is assumed that the SCell is provided by the base station apparatus 30.

In S21, the terminal 20 receives the reference signal (CSI-RS, the SSB, or both CSI-RS and the SSB) transmitted for each beam from the base station apparatus 30, and measures the quality thereof (RSRP, RSRQ, and the like). Herein, when the number of times of determination that the quality of all the reference signals (that is, the beam) has deteriorated reaches a predetermined threshold value, the terminal 20 transmits an SR (scheduling request) in S21. Further, in S23, searching for a new beam is performed.

In S20, all the reference signals are a set (failure detection resources) of reference signals (indexes) set from the base station apparatus 10 to the terminal 20 for measuring for the detection of the beam failure, and these are referred to as q0. For example, 8 is set to this.

In S23, the terminal 20 measures the L1-RSRP of the candidate reference signal (candidateBeamRSList set from the base station apparatus 10 and referred to as q1) and selects the reference signal (beam) of which the L1-RSRP becomes at maximum as a new beam.

In S22, the terminal 20 receives an UL-grant and uses the resources allocated therein to transmit the MAC CE in S24. The MAC CE includes the index of the CC with the beam failure and the index (that is, the index of the beam) of the new reference signal for each CC. The terminal 20 receives the BFR response (PDCCH) in S25.

After 28 symbols from the reception of the PDCCH (PDCCH of S25) that schedules the PUSCH, the terminal 20 monitors the PDCCH by assuming that the PDCCH to be monitored by the SCell thereafter has a QCL relationship with a new beam (reference signal). Further, after 28 symbols, the terminal 20 transmits the PUSCH transmitted by the SCell thereafter by using a spatial domain filter corresponding to a spatial domain filter of the new beam (reference signal). That is, the QCL is also updated for the PUSCH.

### <Problem of Example 2>

In the high frequency band that is assumed to be used in the radio communication system of the present embodiment, it is assumed that a larger number of narrower beams than the existing technology will be used. In that case, there is a possibility that the conditions of triggering the BFR in the existing technology (for example, the technology described in the specification of Rel-15/-16) may not be efficient.

In the existing technology, in S10 of Fig. 8 and S20 of Fig. 8, the terminal 20 triggers the BFR (starts searching for the new beam) when BFI_COUNTER > beamFailureInstanceMaxCount is detected before beamFailureDectionTimer expires. Both the beamFailureDetectionTimer and the beamFailureInstanceMaxCount are parameters configured by the RRC from the base station apparatus 10 to the terminal 10.

BFI_COUNTER is a counter that is incremented (incremented by 1) when the radio link quality of all reference signals (beams) in q0 becomes worse than the threshold value (Q_{out, LR}).

In the existing technology, the candidate value of beamFailureInstanceMaxCount is {1, 2, 3, 4, 5, 6, 8, 10}, and any value is set in the terminal 20 by the RRC. Further, in the existing technology, the candidate value in the RRC signaling of the beamFailureDetectionTimer is {1, 2, 3, 4, 5, 6, 8, 10}. Assuming that this value is, for example, k, the beamFailureDetectionTimer (time length as a timer) is "k × maximum value of ({shortest periodicity of the P-CSI-RS configurations and/or the SSB, 2 [mseq]})". That is, the value is {1,2,3,4,5,6,8,10} times (RRC configurable) of the max. of {shortest periodicity of the P-CSI-RS configurations and/or SSB, 2 [mseq]}.

In the existing technology, the value of beamFailureInstanceMaxCount may be too small and may trigger the BFR too frequently. This is set as Problem 1.

In addition, since the periodicity of P-CSI-RS/SSB is slot-based, it is assumed to be shorter than 2 msec when considering a wide SCS. Therefore, there is a high possibility that k × 2 will be used as the beamFailureDetectionTimer (time length as a timer), and in that case, the beamFailureDetectionTimer (time length as a timer) may be too long. This is set as Problem 2.

Hereinafter, Example describing the technique for solving Problem 1 will be described as Example 2-1, and Example describing the technique for solving Problem 2 will be described as Example 2-2.

### <Example 2-1>

In Example 2-1, a value larger than a value disclosed in the existing specification (for example, Non-Patent Document 2) can be allowed to be used as a value set from the base station apparatus 20 to the terminal 10 by the RRC message (beamFailureInstanceMaxCount). Hereinafter, Examples 2-1-1 and 2-1-2 will be described.

### <Example 2-1-1>

For example, {1, 2, 3, 4, 5, 6, 8, 10, 20, 25, 30} is included as candidate values in the RRC message (beamFailureInstanceMaxCount), and the RRC message including {1, 2, 3, 4, 5, 6, 8, 10, 20, 25, 30} is notified from the base station apparatus 10 to the terminal 20.

For example, since the frequency band of the serving cell is a high frequency band, the terminal 20 selects 30 as a large value of the beamFailureInstanceMaxCount among {1, 2, 3, 4, 5, 6, 8, 10, 20, 25, 30} and executes, for example, the procedure of S10 of Fig. 8 and S20 of Fig. 9 as the beamFailureInstanceMaxCount = 30.

When a plurality of candidate values are set as described above, one value to be used by the terminal 20 may be specified by the MAC signaling or the DCI from the base station apparatus 10 to the terminal 20.

Further, the base station apparatus 10 may store, for example, {1, 2, 3, 4, 5, 6, 8, 10, 20, 25, 30} as a set of candidate values that can be transmitted by the RRC message (beamFailureInstanceMaxCount), may select, for example, 30 among the candidate values, and may notify 30 to the terminal 20 with the RRC message (beamFailureInstanceMaxCount). The terminal 20 executes the procedure, for example, of S10 in Fig. 8 and S20 in Fig. 9 by using the beamFailureInstanceMaxCount = 30.

### <Example 2-1-2>

In Example 2-1-2, a new RRC message (herein, beamFailureInstanceMaxCount-r17) is introduced, and a value larger than a value disclosed in the existing specification (for example, Non-Patent Document 2) can be allowed to be used as a value of a beamFailureInstanceMaxCount from the base station apparatus 20 to the terminal 10 by the beamFailureInstanceMaxCount-r17.

For example, {20, 25, 30} is included as candidates value in the beamFailureInstanceMaxCount-r17, and the beamFailureInstanceMaxCount-r17 including {20, 25, 30} is notified from the base station apparatus 10 to the terminal 20.

The terminal 20 selects, for example, 30 among {20, 25, 30} and executes, for example, S10 in Fig. 8 and S20 in Fig. 9 as beamFailureInstanceMaxCount = 30.

Further, the base station apparatus 10 may store, for example, {20, 25, 30} as a set of candidate values of N310 that can be transmitted by the beamFailureInstanceMaxCount-r17, may select, for example, 30 among the candidate values, and may notify 30 to the terminal 20 with the beamFailureInstanceMaxCount-r17. The terminal 20 executes, for example, S10 in Fig. 8 and S20 in Fig. 9 by using beamFailureInstanceMaxCount = 30.

By using a large count value, it is possible to avoid accidentally triggering the BFR with a small number of beam deterioration events.

Whether or not the terminal 20 uses a large value as described above or a new RRC message (new field) may be set by the RRC configuration from the base station apparatus 10 to the terminal 20. Alternatively, whether or not the terminal 20 uses a large value and a new RRC message (new field) as described above may be determined by the carrier frequency or the SCS of the cell in which the terminal 20 is in service. For example, when the carrier frequency (or the SCS) is larger than the threshold, a large value or a new RRC message as described above is used.

### <Example 2-2>

In Example 2-2, a value smaller than 2 [msec] can be allowed to be used instead of 2 [msec] in "k × maximum value of ({shortest periodicity of the P-CSI-RS configurations and/or the SSB, 2 [msec]})" that determines the beamFailureDectionTimer (time length as a timer). Hereinafter, Examples 2-2-1 and 2-1-2 will be described.

### <Example 2-2-1>

Instead of 2 in "k × maximum value of ({shortest periodicity of the P-CSI-RS configurations and/or the SSB, 2 [msec]})", the terminal 20 uses a number smaller than 2. For example, 0.1, 0.5, 1.0, 1.5, and the like can be used. Which value is used as a number smaller than 2 is regulated in the specification, and the terminal 20 may store the value in advance, or notification from the base station apparatus 10 to the terminal 20 may be performed by the RRC signaling, the MAC signaling, or the DCI.

The terminal 20 executes S10 in Fig. 8 and S20 in Fig. 9 by using the beamFailureDetectionTimer (time length as a timer) determined by using a number smaller than 2 instead of 2 in "k × maximum value of ({shortest periodicity of the P-CSI-RS configurations and/or the SSB, 2 [msec]})".

### <Example 2-2-2>

In Example 2-2-2, a new RRC message (new field) is introduced, and a number smaller than 2 can be allowed to be used instead of 2 in "k × maximum value of ({shortest periodicity of the P-CSI-RS configurations and/or the SSB, 2 [msec]})".

For example, {0.1, 0.5, 1.0, 1.5} is included as candidate values in the new RRC message, and the new RRC message including {0.1, 0.5, 1.0, 1.5} is notified from the base station apparatus 10 to the terminal 20.

The terminal 20 selects, for example, 0.5 among {0.1, 0.5, 1.0, 1.5}, determines the beamFailureDetectionTimer (time length as a timer) by using 0.5 instead of 2 in "k × maximum value of ({shortest periodicity of the P-CSI-RS configurations and/or the SSB, 2 [msec]})", and executes S10 in Fig. 8 and S20 in Fig. 9.

Further, for example, the base station apparatus 10 may store {0.1, 0.5, 1.0, 1.5} as a set of candidate values that can be transmitted by a new RRC message, and the base station apparatus 10 may select, for example, 0.5, and may notify 0.5 to the terminal 20 with a new RRC message. The terminal 20 determines the beamFailureDetectionTimer (time length as a timer) by using 0.5 and executes S10 in Fig. 8 and S20 in Fig. 9.

It is noted that information notified from the base station apparatus 10 to the terminal 20 by the new RRC message may be the beamFailureDetectionTimer (time length as a timer) itself. According to Example 2-2-2, a faster BFR trigger can be executed.

Whether or not the terminal 20 uses a small value as described above or a new RRC message (new field) may be set by the RRC configuration from the base station apparatus 10 to the terminal 20. Alternatively, whether or not the terminal 20 uses a small value and a new RRC message (new field) as described above may be determined by the carrier frequency or the SCS of the cell in which the terminal 20 is in service. For example, when the carrier frequency (or the SCS) is larger than the threshold, a smaller value or a new RRC message as described above is used.

### (Example 3)

Example 3 is performed in combination with Example 1 or Example 2. Example 3 may be performed in combination with both Example 1 and Example 2.

Since the frequency band of 52.6 to 71 GHz, which is assumed to be used in the radio communication system of the present embodiment, includes an unlicensed spectrum (unlicensed band), in some cases, in the radio communication system of the present embodiment, the LBT may be required.

In the RLM and the BFR in Examples 1 and 2, the terminal 20 receives the reference signal (the CSI-RS, the SSB, or the CSI-RS, and the SSB) periodically transmitted from the base station apparatus 10 to perform the quality measurement.

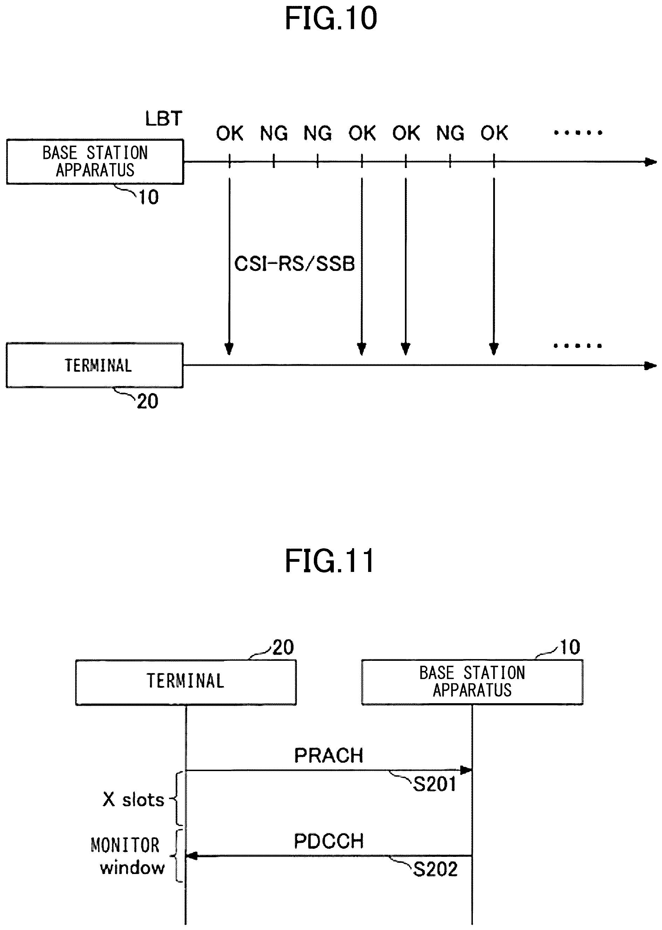

However, when the LBT is performed in the base station apparatus 10, for example, as illustrated in Fig. 10, the LBT may or may not succeed at each transmission timing of the reference signal. For this reason, it is assumed that the reference signal cannot be periodically transmitted from the base station apparatus 10, and thus, the frequency at which the reference signal can be received by the terminal 20 becomes low. For this reason, there is a possibility that the RLM and the BFR may not be appropriately executed. In particular, when the large count values described in Examples 1 and 2 are used, there is a possibility that the RLM and the BFR may not be appropriately executed.

Therefore, in Example 3, in Example 1 (RLM/RLF) and Example 2 (BFD/BFR), the terminal 20 and the base station 10 determine whether or not the processing using the new parameters and the like described in Example 1 (RLM/RLF) and Example 2 (BFD/BFR) is performed by using determination criteria with respect to the LBT. Basically, when the LBT is not performed, processing using the new parameters and the like described in Example 1 (RLM/RLF) and Example 2 (BFD/BFR) is performed. The determination criteria are as follows, for example.
(1) Whether it is necessary to perform the LBT.
(2) The latest result of whether or not the LBT succeeds.
(3) Whether or not the slot (slot that processes the RLM/RLF and the BFD/BFR) is in channel occupancy (COT).

For example, (1) whether or not it is necessary to perform the LBT is determined by each of the terminal 20 and the base station 10 based on whether the frequency band to be used is an unlicensed band or a licensed band. Further, each of the terminal 20 and the base station 10 may determine whether or not the LBT is required based on whether or not the frequency band to be used is a band that requires the LBT.

(2) With respect to the latest result of whether or not the LBT succeeds, each of the terminal 20 and the base station 10 can obtain the result when the LBT is executed by themselves.

(3) With respect to whether or not the slot is in the channel occupancy time (COT), the terminal 20 and the base station apparatus 10 can determine it since the terminal 20 and the base station apparatus 10 configures the COT from the LBT result thereof. Further, the terminal 20 can be determined it from, for example, the DCI information received from the base station apparatus 10. Hereinafter, Examples 3-1 to 3-3 will be described as specific examples using the determination criteria.

### <Example 3-1: RLM/RLF>

Example 3-1 is configured with Example 3-1-1 and Example 3-1-2.

### <Example 3-1-1>

Example 3-1-1 is premised on Example 1-1-2 as an example. Each of the terminal 20 and the base station apparatus 10 determines whether or not it is necessary to execute the LBT, and when it is determined that the LBT is not necessary, a large counter value (N310 or N311 or both N310 and N311) is notified from the base station apparatus 10 to the terminal 20 by using the new RRC message (herein, the RLF-TimersAndConstants-r17) described in Example 1-1-2, and the terminal 20 executes the RLM/RLF by using the counter value. When the LBT is executed, for example, the existing RLF-TimersAndConstants are used. According to Example 3-1-1, the RLM/RLF can be appropriately executed even when the LBT is executed.

### <Example 3-1-2>

Example 3-1-2 is premised on Example 1-2-1 as an example. In Example 1-2-1, when the terminal 20 detects X times of out-of-sync indication in Y, T310 is started.

In Example 3-1-2 considering the LBT, when the frequency band used is an unlicensed band, if the terminal 20 detects that the base station apparatus 10 has failed in the LBT, the terminal 20 uses a value larger than the threshold value (X_unlic) as a value of X. For example, a value larger than the threshold value (X_unlic) is used from the candidate values of X set from the base station apparatus 10. When the terminal 20 does not detect that the base station apparatus 10 has failed in the LBT, the terminal 20 may perform the operation as described in Example 1-2-1.

It is noted that, the terminal 20 may grasp that the base station apparatus 10 has failed in the LBT with the notification from the base station apparatus 10, may detect that the signal to be transmitted from the base station apparatus 10 is not received, and may perform detection by other methods.

Further, when the base station apparatus 10 fails in the LBT, the terminal 20 may be notified of an X value larger than the threshold value (X_unlic), and the terminal 20 may use the X value.

The threshold value (X_unlic) may be regulated in the specification and may be stored in advance by the terminal 20 and the base station apparatus 10, or notification may be performed from the base station apparatus 10 to the terminal 20 by the RRC signaling, the MAC signaling, or the DCI. According to Example 3-1-2, the RLM/RLF can be appropriately executed even in a situation where there is LBT failure.

### <Example 3-2: BFD/BFR>

Example 3-2 is premised on Example 2-1-2 as an example. Each of the terminal 20 and the base station apparatus 10 determines whether or not it is necessary to execute the LBT, and when it is determined that the LBT is not necessary, a large counter value is notified from the base station apparatus 10 to the terminal 20 by using the new RRC message (herein, the beamFailureInstanceMaxCount-r17) described in Example 2-1-2, and the terminal 20 executes the RFR/BFD by using the counter value. When it is necessary to perform the LBT, for example, beamFailureInstanceMaxCount is used.

According to Example 3-1-2, it is possible to avoid using a large value when the LBT is required.

### <Example 3-3: RLM, BFR>

Example 3-3 may be premised on any one of Example 1 (RLM) and Example 2 (BFR). Further, Example 3-3 may be applied to the existing RLM and the existing BFR independently of Example 1 (RLM) and Example 2 (BFR).

In Example 3-3, when the LBT is required (that is, when the unlicensed band is used), the terminal 20 uses an aperiodic reference signal as a reference signal to be used for beam monitoring/selection in the RLM or BFR rather than a periodic reference signal. The aperiodic reference signal is, for example, A-CSI-RS, SP-CSI-RS, PDCCH and the like.

For example, when the terminal 20 and the base station apparatus 10 use an unlicensed band, the base station apparatus 10 transmits the aperiodic reference signal to the terminal 10. For example, the base station apparatus 10 transmits the reference signal at the timing when the LBT succeeds.

The terminal 10 executes the RLM and the BFR by performing, for example, the counting process described in Figs. 6, 8, 9, and the like by measuring the reference signal received aperiodically. According to Example 3, when the LBT is required, the RLF and the BFR can be appropriately executed without being affected by failure of the LBT.

### (Example 4)

Next, Example 4 will be described. With respect to the BFD/BFR in the PCell/PSCell described with reference to Fig. 8, in the existing technique (for example, Non-Patent Document 3), when the terminal 20 transmits the PRACH notifying a new beam (new reference signal) with the slot n, the monitoring of the PDCCH (PDCCH of CORESET#0) is started from the slot n + 4 in a search space specified by the recoverySearchSpace Id. This PDCCH and the corresponding PDSCH have a QCL relationship with the new beam (reference signal).

In a high frequency band assumed in the present embodiment, since it is assumed that a wide SCS is used, the time length of four slots becomes very short. For this reason, there is a possibility that the base station apparatus 10 may not be able to prepare/transmit the PDCCH to be transmitted in the search space specified by the recoverySearchSpace Id.

Therefore, in Example 4, when a high frequency band (for example, a frequency higher than 52.6 GHz) is used as the frequency band in the BFR for the PCell/PSCell, a number larger than four slots can be allowed to be used as the number of slots from the PRACH transmission to the starting of the PDCCH monitoring.

That is, as illustrated in Fig. 11, a value larger than 4 is used as a value of X which is the number of slots from the transmission of the PRACH in S201 by the terminal 20 to the start of monitoring the PDCCH of S202. From the viewpoint of the base station apparatus, the base station apparatus 10 receives the PRACH from the terminal 20 and, after that, transmits the PDCCH by the number of slots larger than 4. Specifically, there are the following Examples 4-1 and 4-2, and Examples 4-3.

### <Example 4-1>

In Example 4-1 as X, a value larger than 4 is regulated in the specification or the like, and each of the terminal 20 and the base station apparatus 10 stores the value of X. Each of the terminal 20 and the base station apparatus 10 executes the BFR using the stored value as X when a band having, for example, a frequency band higher than 52.6 GHz. The values larger than 4 used as X are, for example, 8, 16, 32, and the like.

### <Example 4-2>

In Example 4-2, a value different from 4 is used as X according to the conditions. Examples 4-2 have the following variations (Examples 4-2-1 to 4-2-4).

### <Example 4-2-1>

In Example 4-2-1, the value of X to be used is determined according to the SCS. For example, when the SCS of the cell that is a target of the BFR is 15 kHz, 30 kHz, or 60 kHz, each of the terminal 20 and the base station apparatus 10 uses 4 as X, and when the SCS is larger than 60 kHz (that is, in a case of 120/240/480/960 kHz, and the like), each of the terminal 20 and the base station apparatus 10 uses a value larger than 4 as X.

### <Example 4-2-2>

In Example 4-2-12, the value of X to be used is determined according to the frequency range (FR). For example, each of the terminal 20 and the base station apparatus 10 uses 4 as X when the FR of the cell that is a target of the BFR is FR1 or FR2, and each of the terminal 20 and the base station apparatus 10 uses a value larger than 4 as X when FR is FR4.

### <Example 4-2-3>

In Example 4-2-3, the value of X to be used is determined according to the capability (UE capability) of the terminal 20. For example, when it is detected that the capability of the terminal 20 is a capability that only 4 can be used as X, each of the terminal 20 and the base station apparatus 10 uses 4 as X, and when it is detected that the capability of the terminal 20 is a capability that a value other than 4 can be used as X, each of the terminal 20 and the base station apparatus 10 uses the value other than 4 as X (if necessary). For the determination if necessary here, Example 4-2-1 or Example 4-2-2 can be used.

### <Example 4-2-4>

In Example 4-2-4, each of the terminal 20 and the base station apparatus 10 uses the value of X notified from the base station apparatus 10 to the terminal 20 by the RRC signaling (or the MAC signaling or the DCI) .

It is noted that in Examples 4-2-1 to 4-2-3, the value used as X according to each condition may be notified from the base station apparatus 10 to the terminal 20 by the RRC signaling (or the MAC signaling or the DCI), may be set in the terminal 20 by SIM, or may be regulated in the specification.

### <Example 4-3>

In Example 4-3, "4 + offset" is used, as a value of X. The offset value can be a negative value, zero, or a positive value.

The offset value (for example, one or more candidate values) is regulated in the specification or the like, and each of the terminal 20 and the base station apparatus 10 stores the value in advance. Alternatively, the offset value (for example, one or more candidate values) is configured (or preconfigured) from the base station apparatus 10 to the terminal 20 by the RRC or the like.

Then, for example, when the information indicating the offset value to be used by the terminal 20 is notified from the base station apparatus 10 to the terminal 20 by the RRC signaling, the MAC signaling, or the DCI, the terminal 20 performs the BFR using "4 + offset" as a value of X.

It is noted that, in any of Example 4-1 and Example 4-2 and Example 4-3, when configuration to perform the operation of Example 4-1/Example 4-2/Example 4-3 from the base station apparatus 10 to the terminal 20 is made by the RRC, the base station apparatus 10 and the terminal 20 may also perform the operation of Example 4-1/Example 4-2/Example 4-3. Further, the determination of performing the operation of Example 4-1/Example 4-2/Example 4-3 may be made according to the capability (UE capability) of the terminal 20.

### (Example 5)

Next, Example 5 will be described. With respect to the BFD/BFR in the PCell/PSCell described with reference to Fig. 8, in the existing technology, when the terminal 20 transmits the PRACH notifying the new beam (new reference message) with the slot n, the monitoring of the PDCCH is started from the slot n + 4 in a search space designated by the recoverySearchSpace Id, and after 28 symbols from the reception of the BFR response (the first PDCCH), the terminal 20 monitors the PDCCH with the CORESET#0 by assuming that there is a QCL relationship between the PDCCH monitored with the CORESET#0 and the new beam (reference signal). That is, after 28 symbols from the reception of the BFR response (the first PDCCH), the QCL of the PDCCH of CORESET#0 is updated so as to have a QCL relationship with the new beam.

Further, in the BFD/BFR in the SCell described with reference to Fig. 9, in the existing technology, after 28 symbols from the reception of the BFR response (PDCCH) after the MAC CE for notifying the new beam is transmitted by the PUSCH, the terminal 20 monitors the PDCCH by assuming that the PDCCH of the SCell to be monitored in all CORESEs has a QCL relationship with the new beam (reference signal).

Further, after 28 symbols described above, the PUSCH transmitted by the PUCCH-SCell is transmitted by using the spatial domain filter corresponding to the spatial domain filter of the new beam (reference signal).

That is, after 28 symbols from the reception of the BFR response (PDCCH), the QCL of the PDCCH and the PUSCH is updated so as to have a QCL relationship with the new beam.

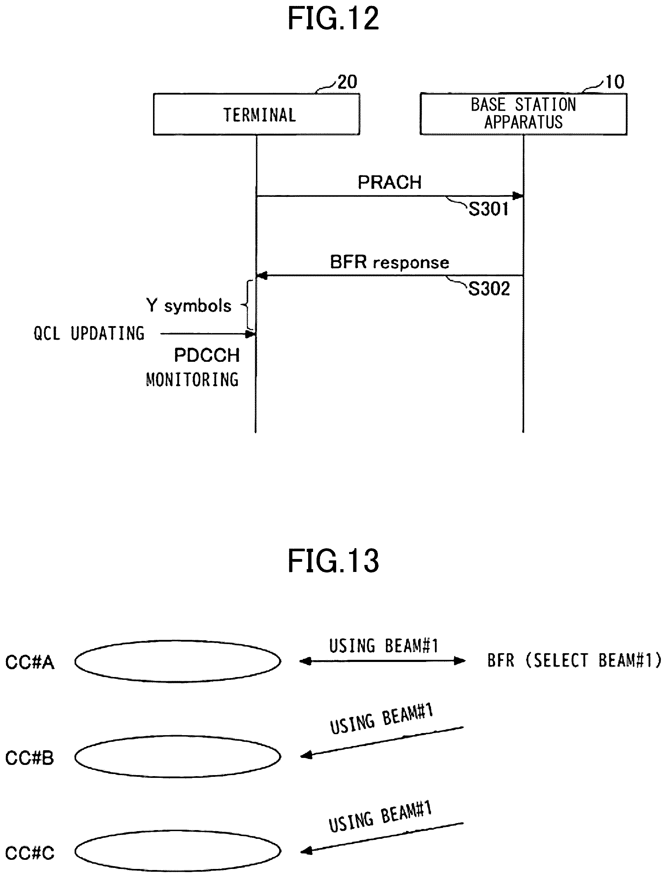

Fig. 12 is a diagram in which the above-mentioned 28 symbols are described as Y symbols. In S301, the terminal 20 transmits the PRACH (the MAC CE in the PUSCH in the BFD/BFR in the SCell). In S302, the terminal 20 receives the BFR response and updates the QCL after the Y symbol from the BFR response.

As described above, in the existing technology, Y is 28. However, there is a possibility that, in a wide SCS used in the high frequency band, that is, a short symbol length, the time length from the reception of the BFR response to 28 symbols later may be too short for the QCL updating.

Conversely, considering the large number of narrow beams that are assumed to be used in the high frequency band, the BFR is assumed to be performed frequently, and according to the assumption, the time length from the reception of the BFR response to 28 symbols later may be too long to make rapid beam change.

Therefore, in Example 5, a value other than 28 can be allowed to be used as Y, as described in Examples 5-1 to 5-3 below.

### <Example 5-1>

In Example 5-1, as a value of Y, a value (one or more candidate values) larger than 28 is regulated in the specification or the like, and each of the terminal 20 and the base station apparatus 10 stores the value in advance. Alternatively, as a value of Y, a value (one or more values) larger than 28 is configured (or preconfigured) from the base station apparatus 10 to the terminal 20 by the RRC or the like. Further, as a value of Y, a value (one or more values) larger than 28 may be notified from the base station apparatus 10 to the terminal 20 by the MAC signaling, the DCI, or the like.

Examples 5-1-1 to 5-1-3 will be described as an example of a method for determining Y to be used actually among the candidate values.

### <Example 5-1-1>

Each of the base station apparatus 10 and the terminal 20 uses a specific value (for example, 56) as Y when the SCS of the cell that is a target of the BFR is larger than the threshold value (for example, 120 kHz).

### <Example 5-1-2>

When the carrier frequency of the cell that is a target of the BFR is larger than the threshold value (for example, 52.6 GHz), each of the base station apparatus 10 and the terminal 20 uses a specific value (for example, 56) as Y.

### <Example 5-1-3>

When it is detected that the capability (UE capability) of the terminal 20 is a capability that only 28 can be used as Y, each of the base station apparatus 10 and the terminal 20 uses 28 as Y, and when it is detected that a capability that a value other than 28 is used as Y, each of the base station apparatus 10 and the terminal 20 uses a value (for example, 56) other than 28 as Y if necessary. For the determination, if necessary, Examples 5-1-1 and 5-1-2 can be used.

### <Example 5-2>

In Example 5-2, a value (one or more candidate values) smaller than 28 is regulated as a value of Y in the specification or the like and is stored in advance in each of the terminal 20 and the base station apparatus 10. Alternatively, as a value of Y, a value (one or more values) smaller than 28 is configured (or preconfigured) from the base station apparatus 10 to the terminal 20 by the RRC or the like. Further, as a value of Y, a value (one or more values) smaller than 28 may be notified from the base station apparatus 10 to the terminal 20 by the MAC signaling, the DCI, or the like.

Examples 5-2-1 to 5-2-4 will be described as an example of a method for determining Y to be used actually among the candidate values.

### <Example 5-2-1>

Each of the base station apparatus 10 and the terminal 20 use a specific value (for example, 0 or 14) as Y when the SCS of the cell that is a target of the BFR is larger than the threshold value (for example, 120 kHz) .

### <Example 5-2-2>

Each of the base station apparatus 10 and the terminal 20 uses a specific value (for example, 0 or 14) as Y when the carrier frequency of the cell that is a target of the BFR is larger than a threshold value (for example, 52.6 GHz).

### <Example 5-2-3>

When it is detected that the capability (UE capability) of the terminal 20 is a capability that only 28 can be used as Y, each of the base station apparatus 10 and the terminal 20 uses 28 as Y, and when it is detected that the capability is a capability that a value other than 28 is used as Y, if necessary, each of the base station apparatus 10 and the terminal 20 uses the value (for example, 0 or 14) other than 28 as Y. When necessary, Example 5-2-1, Example 5-2-2, and Example 5-2-4 can be used for the determination.

### <Example 5-2-4>

Each of the base station apparatus 10 and the terminal 20 uses a specific value (for example, 0 or 14) as Y when the number of beams of the SSB, the CSI-RS, or the SRS of the cell that is a target of the BFR is larger than a threshold value (for example, 32 or 64).

### <Example 5-3>

In Example 5-3, "28 + offset" is used, as a value of Y. The offset value can be a negative value, zero, or a positive value.

The offset value (for example, one or more candidate values) is regulated in the specification or the like, and each of the terminal 20 and the base station apparatus 10 stores the value in advance. Alternatively, an offset value (for example, one or more candidate values) is configured (or preconfigured) from the base station apparatus 10 to the terminal 20 by the RRC or the like.

Then, for example, when the information indicating the offset value to be used by the terminal 20 is notified from the base station apparatus 10 to the terminal 20 by the RRC signaling, the MAC signaling, or the DCI, the terminal 20 performs the BFR by using "28 + Offset" as a value of Y (Fig. 12). Further, in addition to the offset, a beam switching gap may be added to 28 symbols.

It is noted that, in the whole of Example 5, the QCL may be updated (updated so as to have a QCL relationship with the new beam) for any one (or all) of the PDCCH, the PUCCH, the PDSCH, and the PUSCH.

It is noted that, in any of Example 5-1, Example 5-2, and Example 5-3, when performing the operation of Example 5-1/Example 5-2/Example 5-3 from the base station apparatus 10 to the terminal 20 is set by the RRC, the base station apparatus 10 and the terminal 20 may also perform the operation of Example 5-1/Example 5-2/Example 5-3. Further, the determination of performing the operation of Example 5-1/Example 5-2/Example 5-3 may be made according to the capability (UE capability) of the terminal 20.

### (Example 6)

Example 6 can be implemented in combination with any other embodiment. As described in S11 of Fig. 8 and S23 of Fig. 9, when the terminal 20 detects the BF, the best beam is searched for from a set (referred to as q1) of candidate beams (specifically, indexes of reference signals) included in a candateBeamRSList. However, in the related art, the maximum number of candidate beams (reference signals) included in q1 is 64.

In the high frequency band assumed in the present embodiment, since it is assumed that more beams are used, there is a possibility that q1 being 64 at the maximum may be insufficient in order to detect an appropriate beam during the BFR.

Therefore, in Example 6, in a cell in a high frequency band (for example, 52.6 GHz or higher), more candidate beams can be allowed to be included in q1.

The candidate beams to be included in q1 are regulated in the specification, and the like, the candidate beams may be stored in advance by the terminal 20 and the base station apparatus 10 or may be set from the base station apparatus 10 to the terminal 20 by the RRC signaling, and the candidate beams may be instructed from the base station apparatus 10 to the terminal 20 by the MAC signaling or the DCI. Further, the number of candidate beams to be included in q1 may be matched to the number of CSI-RS beams or may be matched to the number of CSI-RS beams and SSB beams.

By including a number of candidate beams larger than 64 in q1, the terminal 20 can select a more appropriate narrow beam at the time of the BFR.

It is noted that, when q1 is not set in the terminal by the RRC, the terminal 20 may generate q1 based on a certain rule. For example, the terminal 20 may allow all the CSI-RS resource IDs (that is, the CSI-RS beams) configured in the terminal 20 to be included in q1.

In addition, the number of q0 may be increased. Specifically, this is as follows.

As described in S10 of Fig. 8 and S20 of Fig. 9, the terminal 20 determines whether or not all the qualities of a set (referred to as q0) of beams (specifically, indexes of a reference signal) included in the failureDetectionResources for detecting the BF are deteriorated. However, in the related art, the maximum number of beams (reference signals) included in q0 is eight.

Since it is assumed that more beams will be used in the high frequency band assumed in the present embodiment, there is a possibility that q0 of 8 at the maximum is insufficient for the purpose of appropriately detecting BF during BFR.

Therefore, in the present embodiment, in a cell in a high frequency band (for example, 52.6 GHz or higher), a large number of beams can be included in q0.

The candidate beams to be included in q0 are regulated in the specification, and the like, the candidate beams may be stored in advance by the terminal 20 and the base station apparatus 10, the candidate beams may be set from the base station apparatus 10 to the terminal 20 by the RRC signaling, and the candidate beams may be instructed from the base station apparatus 10 to the terminal 20 by the MAC signaling or the DCI.

Further, the number of beams included in q0 may be associated with the number of CORESETs configured for each BWP. For example, the number of beams included in q0 may be associated with the number of reference signals having QCL relationship with PDCCH.

By allowing a larger number of beams than 8 to be included in q0, detecting BF excessively frequently can be avoided.

It is noted that, when configuration for applying Example 6 from the base station apparatus 10 to the terminal 20 is made by RRC, Example 6 may be applied to the base station apparatus 10 and the terminal 20. Further, the application of Example 6 may be made according to the capability (UE capability) of the terminal 20.

### (Example 7)

Next, Example 7 will be described. Example 7 can be performed in combination with any of the other examples.

In the present embodiment, in some cases, the base station apparatus 10 and the terminal 20 may use one or more beams simultaneously in the plurality of CCs when performing carrier aggregation in the plurality of CCs. That is, in some cases, the terminal 20 and the base station apparatus 20 may transmit and receive signals by simultaneously using the same beam between the plurality of CCs. In that case, the beam failure (BF) in a certain CC denotes that the beam failure (BF) also occurs in one or more other CCs.

Therefore, in Example 7, in the BFR procedure described with reference to Fig. 8 or 9 for a certain cell (CC), after the reception of the BFR response from the base station apparatus 10, the terminal 20 also applies the beams selected in the CC (CC that is a target of the BFR procedure) to the set of one or more other CCs. That is, the terminal 20 updates the QCL relationship of the PDCCH (PDCCH and PUCCH of the SCell) in the CC (CC that is a target of the BFR procedure), and also performs QCL updating based on the new beam in the same way as the QCL updating in the CC (CC that is a target of the BFR procedure) for one or more other CCs performing the carrier aggregation in the CC (CC that is a target of the BFR procedure).

From the point of view of the base station apparatus 10, for the CC (CC that is a target of the BFR procedure), the base station apparatus 10 transmits the PDCCH with the same beam as the new beam reported from the terminal 20 and, for one or more other CCs, the base station apparatus 10 transmits the PDCCH and receives the PUCCH with the same beam as the new beam reported from the terminal 20.

More specifically, for example, as illustrated in Fig. 13, it is assumed that the terminal 20 (and the base station apparatus 10) uses CC#A to #C illustrated in Fig. 13. At this time, when the terminal 20 performs the BFR with the CC#A to select a beam#1, the beam#1 is applied to the CC#B and the CC#C in addition to the CC#A. That is, for example, the base station apparatus 10 transmits the PDCCH with the beam#1 not only with the CC#A but also with the CC#B and the CC#C, and the terminal 20 performs QCL updating based on the beam#1 not only with the CC#A but also with the CC#B and the CC#C.

The set of one or more CCs (including the CCs that are targets of the BFR procedure) to which the beam selected in the CCs that are targets of the BFR procedure is applied may be, for example, all the CCs (including the CCs that are targets of the BFR procedure) set in the terminal 20 (example of Fig. 13). The set of one or more CCs to which the beam selected in the CCs that are targets of the BFR procedure is applied may be configured to the terminal 20 by the RRC signaling.

The set of one or more CCs (including the CCs that are targets of the BFR procedure) to which the beam selected in the CCs that are targets of the BFR procedure is applied may be a set of the CCs having a specific carrier frequency. The specific carrier frequency is, for example, a carrier frequency larger than 30 GHz, a carrier frequency not included in FR1, or a carrier frequency higher than 52.6 GHz. Further, the set of one or more CCs (including the CCs that are targets of the BFR procedure) to which the beam selected in the CCs that are targets of the BFR procedure is applied may be a set of CCs included in an applicable-CC-List.

Further, in Example 7, in the beam selection described in S11 of Fig. 8 and S23 of Fig. 9, the terminal 20 may select the best beam by measuring the L1-RSRP of the candidate beams of all the CCs set in the terminal 20 or may select the best by measuring the L1-RSRP of the candidate beams of the CCs of one or more specific cells (for example, special cells) set by the RRC signaling for the terminal 20.

Further, the terminal 20 may select the best beam by measuring the L1-RSRP of the candidate beams of one or more CCs having a specific carrier frequency. The specific carrier frequency is, for example, a carrier frequency larger than 30 GHz, a carrier frequency not included in FR1, or a carrier frequency higher than 52.6 GHz.

It is noted that, when configuration for applying Example 7 is made by RRC from the base station apparatus 10 to the terminal 20, Example 7 may be applied to the base station apparatus 10 and the terminal 20. Further, the application of Example 7 may be made according to the capability (UE capability) of the terminal 20.

### (Example 8)

Next, Example 8 will be described. Example 8 can be performed in combination with any of the other examples.

In any of the BFRs of Figs. 8 and 9, in the related art, the number of new beams selected by the terminal 20 and reported to the base station apparatus 10 is only one. However, from the viewpoint of grasping the situation of the beam received by the terminal 20 on the base station apparatus 10 side, it is desirable that the terminal 20 reports, to the base station apparatus 10, a plurality of beams obtained as a result of the searching.

Therefore, in Example 8, for example, in S12 of Fig. 8 or S24 of Fig. 9, the terminal 20 reports, to the base station apparatus 10, the plurality of beams (for example, two beams, specifically, indexes of the two reference signals) detected by the terminal 20 by beam searching (S11 of Fig. 8 or S23 of Fig. 9).

As for the number of beams to be reported by the terminal 20 to the base station apparatus 10, for example, the number configured by the RRC signaling from the base station apparatus 10 to the terminal 20 may be used. Alternatively, the terminal 20 may determine the number of beams that the terminal 20 to be reported to the base station apparatus 10. Specific examples are as follows.

The terminal 20 selects the top X beams with good quality based on the measured L1-RSRP, and when the difference in L1-RSRP between the X beams is within Y, one best beam is report to base station apparatus 10. When the difference in L1-RSRP between the X beams is not within Y, the terminal 20 reports all the X beams.

X and Y may be regulated in specification or the like, may be set by the RRC from the base station apparatus 10 to the terminal 20, or may be determined according to the capability of the terminal 20.

### transmission Method>

For example, in the BFR procedure illustrated in Fig. 9, the terminal 20 includes and transmits a plurality of beams to the MAC CE to be reported in S24.

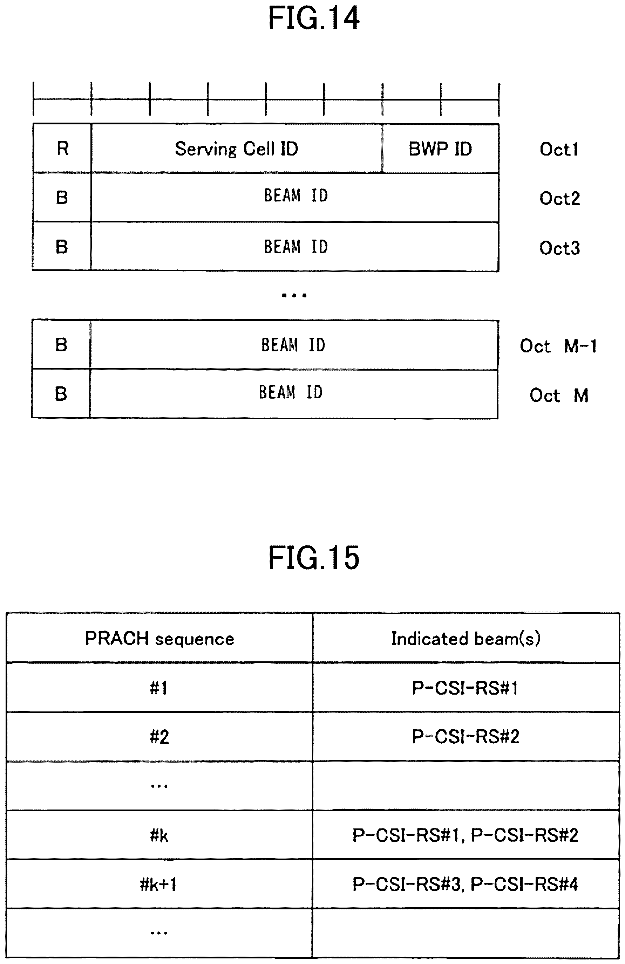

Fig. 14 is an example of the MAC CE. When reporting only one beam, the terminal 20 inserts a bit indicating that only one beam is reported into the B (MSB) of Oct2. In this case, no bit does need to exist after Oct3.

When reporting a plurality of beams, the terminal 20 inserts a bit indicating that the next beam is reported into the B (MSB) of Oct2 with the next bit string (Oct3) and inserts the beam ID (ID of the reference signal) in a bit example of Oct2. The same applies thereafter.

In the case of PCell/PSCell BFR illustrated in Fig. 8, for example, a 2-step RACH is used to transmit a report data (MAC CE) together with the PRACH in the step of MsgA transmission.

Alternatively, in the case of the PCell/PSCell BFR illustrated in Fig. 8, the PRACH sequence may be allowed to include information on a plurality of beams to transmit the information.

For example, as illustrated in Fig. 15, the PRACH sequence and the beam ID (one or a plurality of the beam IDs) are associated with each other. Association information in Fig. 15 is regulated in the specification or the like, may be stored in advance by the terminal 20 and the base station apparatus 10, or may be set by the RRC signaling from the base station apparatus 10 to the terminal 20.

The terminal 20 generates and transmits the PRACH sequence corresponding to the beam to be reported based on the information in the table of Fig. 15.

In addition, in order to reduce the number of the PRACH sequences, a combination of information in Fig. 15 may be configured by the RRC signaling from the base station apparatus 10 to the terminal 20. The combination is, for example, associating "P-CSI-RS#1, #2, #3, #4" with the PRACH sequence#1. Applying such a combination may be set by the RRC signaling from the base station apparatus 10 to the terminal 20.

### <Application of 2-Step RACH>

In the case of the PCell/PSCell BFR illustrated in Fig. 8, the 2-step RACH may be used to report the plurality of beams.

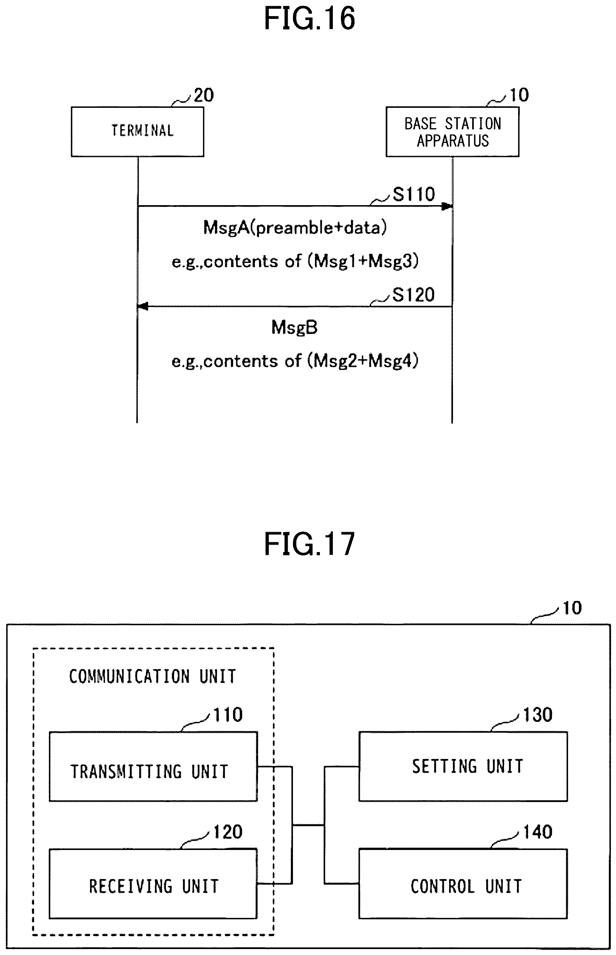

An example of the 2-step RACH is illustrated in Fig. 16. Fig. 16 illustrates contention-based random access or collision-type random access (CBRA) as an example, but the 2-step RACH can also be applied to contention free random access or non-collision-type random access (CFRA). Example 8 may be applied to any one of the CBRA and the CFRA.

In S110, the terminal 20 transmits a MessageA (MsgA) having a preamble (PRACH) and data (PUSCH) to the base station apparatus 10. It is noted that the preamble and the data herein correspond to, for example, Msg1 and Msg3 in a 4-step RACH.

In S120, the base station apparatus 10 transmits a MessageB (MsgB) to the user terminal 20. The content of the MsgB corresponds to, for example, Msg2 and Msg4 in the 4-step RACH.

S120 described above corresponds to the PRACH transmission of S12 of Fig. 8, and S120 corresponds to the reception of the BFR response of S13 of Fig. 8.

In Example 8, the terminal 20 includes the ID of one or more beams in MsgA. In addition to the IDs of the beams, the measurement result (L1-RSRP) for each beam may be included.

Further, the terminal 20 may report the best beam with the PRACH of the MsgA and the second best beam (and subsequent beams) with the MAC CE by the PUSCH of the MsgA. Further, the terminal 20 may not report the second best beam when the difference in L1-RSRP between the best beam and the second best beam is larger than the threshold value X. Further, the terminal 20 may not report the second best beam when the L1-RSRP of the second best beam is lower than the threshold value Y.

When the terminal 20 does not report the second beam, the field for reporting the beam may not be provided in the MAC CE, or the field may be provided but the content may be empty.

X and Y may be regulated in specification or the like, may be set by the RRC from the base station apparatus 10 to the terminal 20, or may be determined according to the capability of the terminal 20. Further, Y may be the Q_{in, LR}. The Q_{in, LR} are threshold values for determining whether or not the beam is in-sync (whether or not it is normal).

According to Example 8, only if necessary in the BFR, the plurality of beams obtained by the beam searching can be reported from the terminal 20 to the base station apparatus 20.

### (Device Configuration)

Next, a functional configuration example of the base station apparatus 10 and the terminal 20 that execute the processes and operations described so far will be described.

### <Base station apparatus 10>

Fig. 17 is a diagram illustrating an example of the functional configuration of the base station apparatus 10. As illustrated in Fig. 17, the base station apparatus 10 includes a transmitting unit 110, a receiving unit 120, a setting unit 130, and a control unit 140. The functional configuration illustrated in Fig. 17 is only an example. Any function classification and name of the functional unit may be used as long as the operation according to the embodiment of the invention can be performed. Further, the transmitting unit 110 and the receiving unit 120 may be collectively referred to as a communication unit.

The transmitting unit 110 includes a function of generating a signal to be transmitted to the terminal 20 side and transmitting the signal in a radio manner. The receiving unit 120 includes a function of receiving various signals transmitted from the terminal 20 and acquiring information of, for example, a higher layer from the received signals. Further, the transmitting unit 110 has a function of transmitting NR-PSS, NR-SSS, NR-PBCH, DL/UL control signals, DCI by the PDCCH, data and the like by the PDSCH to the terminal 20.

The setting unit 130 stores preconfigured configuration information and various configuration information to be transmitted to the terminal 20 in the storage device included in the setting unit 130, and reads the configuration information out from the storage device if necessary.

The control unit 140 schedules the DL reception or the UL transmission of the terminal 20 via the transmitting unit 110. Further, the control unit 140 includes a function of performing the LBT. The function unit related to signal transmission in the control unit 140 may be included in the transmitting unit 110, and the function unit related to signal reception in the control unit 140 may be included in the receiving unit 120. Further, the transmitting unit 110 may be referred to as a transmitter, and the receiving unit 120 may be referred to as a receiver.

### <Terminal 20>

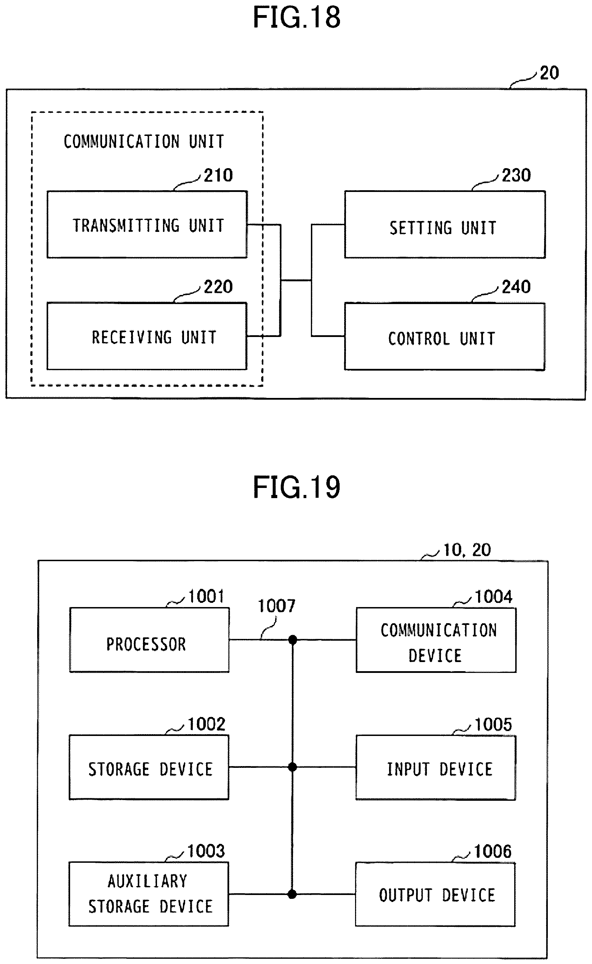

Fig. 18 is a diagram illustrating an example of a functional configuration of the terminal 20. As illustrated in Fig. 18, the terminal 20 includes a transmitting unit 210, a receiving unit 220, a setting unit 230, and a control unit 240. The functional configuration illustrated in Fig. 12 is only an example. Any function classification and name of the functional unit may be used as long as the operation according to the embodiment of the invention can be performed. The transmitting unit 210 and the receiving unit 220 may be collectively referred to as a communication unit.

The transmitting unit 210 generates a transmission signal from the transmission data and transmits the transmission signal in a radio manner. The receiving unit 220 receives various signals in a radio manner and acquires a signal of a layer higher than the received signal of the physical layer. Further, the receiving unit 220 has a function of receiving the NR-PSS, the NR-SSS, the NR-PBCH, the DL/UL/SL control signals, the DCI by the PDCCH, the data by the PDSCH, and the like transmitted from the base station apparatus 10. Further, for example, the transmitting unit 210 may transmit a physical sidelink control channel (PSCCH), a physical sidelink shared channel (PSSCH), a physical sidelink discovery channel

(PSDCH), a physical sidelink broadcast channel (PSBCH), or the like as D2D communication on another terminal 20, and the receiving unit 120 may receive the PSCCH, the PSSCH, the PSDCH, the PSBCH, or the like from another terminal 20.

The setting unit 230 stores various configuration information received from the base station apparatus 10 or another terminal by the receiving unit 220 in a storage device included in the setting unit 230, and reads the configuration information out from the storage device if necessary. The setting unit 230 also stores the preset configuration information. The control unit 240 controls the terminal 20. Further, the control unit 240 includes a function of performing the LBT.

### <Summary>

The present embodiment provides at least the terminals, the base station apparatus, and the beam failure recovery methods illustrated as follows.

### <Configuration Relating to Examples 1 and 3>

### (Section 1)

A terminal including:
a receiving unit which measures a quality of a radio link; and
a control unit which starts a timer when the number of consecutive detections of radio link quality deterioration notification reaches a first threshold value and determines whether or not the number of consecutive occurrences of radio link quality normality notification reaches a second threshold value until the timer expires,
wherein the first threshold value or the second threshold value is a value larger than a predetermined value.

### (Section 2)

The terminal according to Section 1, wherein, when a carrier frequency or an SCS in a cell that is a target of monitoring is larger than a predetermined value, the control unit uses a value larger than the predetermined value as the first threshold value or the second threshold value.

### (Section 3)

A terminal including:
a receiving unit which measures a quality of a radio link; and
a control unit which starts a timer for determining whether or not radio link failure occurs when the number of times of detection of radio link quality deterioration notification reaches a threshold value in the number of times of detection of the radio link quality normality notification or within a certain time length.

### (Section 4)

The terminal according to Section 3, wherein, when a cell that is a target of monitoring is a cell that requires LBT, the control unit uses a value larger than a predetermined value as the threshold value when failure of the LBT is detected.

### (Section 5)

A base station apparatus including a transmitting unit which starts a timer when the number of consecutive detections of radio link quality deterioration notification reaches a first threshold value and transmits a reference signal to a terminal which determines whether or not the number of consecutive occurrences of radio link quality normality notification reaches a second threshold value until the timer expires,

wherein the first threshold value or the second threshold value is a value larger than a predetermined value, and the transmitting unit transmits the first threshold value or the second threshold value to the terminal.

### (Section 6)

A base station including a transmitting unit which transmits a reference signal to a terminal that starts a timer for determining whether or not radio link failure occurs when the number of times of detection of radio link quality deterioration notification reaches a threshold value in the number of times of detection of radio link quality normality notification or within a certain time length.
wherein the transmitting unit transmits the threshold value, the certain number of times, or the time length to the terminal.

### <Configuration Relating to Examples 2 and 3>

### (Section 1)

A terminal including:
a receiving unit which monitors a quality of a beam; and
a control unit which starts a beam failure recovery procedure when the number of times of detection of quality deterioration of all beams in a certain set exceeds a threshold value before a timer expires after the timer is started,
wherein the threshold value is larger than a predetermined value.

### (Section 2)

The terminal according to Section 1, wherein the control unit determines a time length of the timer based on the time length smaller than 2 msec.

### (Section 3)

The terminal according to Section 1 or 2, wherein, when a carrier frequency or an SCS in a cell that is a target of monitoring is larger than a predetermined value, the control unit uses a value larger than the predetermined value as the threshold value.

### (Section 4)

The terminal according to any one of Sections 1 to 3, wherein, when a cell that is a target of monitoring is a cell that requires LBT, the receiving unit monitors the quality of the beam by measuring a reference signal transmitted aperiodically from a base station apparatus.

### (Section 5)

A base station apparatus including
a transmitting unit which transmits a reference signal to terminal that starts a beam failure recovery procedure when the number of times of detection of quality deterioration of all beams in a certain set is detected exceeds a threshold value before a timer expires after the timer is started,
wherein the threshold value is a value larger than a predetermined value, and the transmitting unit transmits the threshold value to the terminal.

### (Section 6)

A beam failure recovery method executed by a terminal, including steps of:
monitoring a quality of a beam; and
starting a beam failure recovery procedure when the number of times of detection of quality deterioration of all beams in a certain set exceeds a threshold value before the timer expires after the timer is started,
wherein the threshold value is larger than a predetermined value.

### <Configuration Relating to Examples 4, 5 and 6>

### (Section 1)

A terminal including:
a transmitting unit which transmits a PRACH in a beam failure recovery procedure; and
a receiving unit which starts monitoring a PDCCH when a certain number of slots have elapsed from the transmission of the PRACH,
wherein the number of slots is larger than a predetermined value.

### (Section 2)

The terminal according to Section 1, wherein the receiving unit uses a value obtained by adding an offset to the predetermined value as the number of slots.

### (Section 3)

A terminal including:
a transmitting unit which reports a new beam detected by beam searching to a base station apparatus in a beam failure recovery procedure;
a receiving unit which receives a beam failure recovery response after reporting the new beam; and
a control unit which updates a QCL based on a new beam after a certain number of symbols have elapsed from the reception of the beam failure recovery response,
wherein the number of symbols is a value larger than a predetermined value or a value smaller than a predetermined value.

### (Section 4)

The terminal according to Section 3, wherein the control unit uses a value obtained by adding an offset to the predetermined value as the number of symbols.

### (Section 5)

The terminal according to any one of Sections 1 to 4,
wherein the number of candidate beams that is a target of searching by beam searching in a beam recovery procedure is larger than a predetermined value, or
wherein the number of beams that is a target of monitoring for detecting trigger of a beam failure recovery procedure is larger than a predetermined value.

### (Section 6)

A base station apparatus including:
a receiving unit which receives a PRACH in a beam failure recovery procedure; and
a transmitting unit which transmits a PDCCH after a certain number of slots have elapsed since the PRACH is received;
wherein the number of slots is larger than a predetermined value.

### (Section 7)

A beam failure recovery method executed by a terminal, including steps of:
transmitting a PRACH in a beam failure recovery procedure; and
starting PDCCH monitoring when a certain number of slots have elapsed from the transmission of the PRACH,
wherein the number of slots is larger than a predetermined value.

### <Configuration Relating to Examples 7 and 8>

### (Section 1)

A terminal including:
a receiving unit which receives signals by the same beam in a plurality of component carriers;
a control unit which updates a QCL in the plurality of component carriers based on a new beam selected by a beam failure recovery procedure in a certain component carrier among the plurality of component carriers.

### (Section 2)

The terminal according to Section 1, wherein the plurality of component carriers are component carriers set from a base station apparatus or component carriers of which carrier frequency is larger than a certain value.

### (Section 3)

The terminal according to Section 1 or 2, wherein the control unit measures candidate beams in the plurality of component carriers in beam searching of the beam failure recovery procedure.

### (Section 4)

A terminal including:
a receiving unit which selects a plurality of beams by performing beam searching in a beam failure recovery procedure; and
a transmitting unit which reports the selected plurality of beams to the base station apparatus by PRACH or MAC CE.

### (Section 5)

A base station apparatus including:
a transmitting unit which transmits signals by the same beam in a plurality of component carrier; and
a control unit which updates a beam in the plurality of component carriers based on a new beam selected by a beam failure recovery procedure in a certain component carrier among the plurality of component carriers.

### (Section 6)

A beam failure recovery method executed by a terminal, including steps of:
receiving signals by the same beam in a plurality of component carriers; and
updating a QCL in the plurality of component carriers based on a new beam selected by a beam failure recovery procedure in a certain component carrier among the plurality of component carriers.

In any of the configurations described above, provided is a technology that enables a terminal to appropriately detect and recover communication failure in a high frequency band in the radio communication system.

### (Hardware Configuration)

The block diagrams (Figs. 17 and 18) used in the description of the embodiment described above illustrate block of functional units. These functional blocks (components) are realized by any combination of at least one of hardware and software. Further, the method of realizing each functional block is not particularly limited. That is, each functional block may be realized by using one physically or logically coupled device or may be realized by directly or indirectly (for example, in a wired manner, a radio manner, and the like) combining two or more physically or logically separated devices and using this plurality of devices. The functional block may be realized by combining the software with the one device or the plurality of devices.

Functions include determination, decision, judgment, computing, calculation, processing, derivation, investigation, searching, confirmation, reception, transmission, outputting, access, solution, selection, choosing, establishment, comparison, assumption, expectation, consideration, broadcasting, notifying, communicating, forwarding, configuring, reconfiguring, allocating, mapping, assigning, and the like, but the functions are not limited thereto. For example, a functional block (component) that makes transmission function is referred to as a transmitting unit (transmitting unit) or a transmitter. In all cases, as described above, the realization method is not particularly limited.

For example, the base station apparatus 10, the terminal 20, and the like in one embodiment of the present disclosure may function as a computer that processes the radio communication method of the present disclosure. Fig. 19 is a diagram illustrating an example of a hardware configuration of the base station apparatus 10 and the terminal 20 according to an example of the present disclosure. The base station apparatus 10 and the terminal 20 described above may be physically configured as a computer device including a processor 1001, a storage device 1002, an auxiliary storage device 1003, a communication device 1004, an input device 1005, an output device 1006, a bus 1007, and the like.

It is noted that, in the following explanation, the term "device" can be read as a circuit, a device, a unit, or the like. The hardware configuration of the base station apparatus 10 and the terminal 20 may be configured to include one or a plurality of the devices illustrated in the drawings or may be configured not to include some of the devices.

Each function in the base station apparatus 10 and the terminal 20, is realized by allowing the processor 1001 to perform an operation by loading predetermined software (program) on the hardware of the processor 1001, the storage device 1002, and the like, by controlling the communication by the communication device 1004, or by controlling at least one of reading and writing of data in the storage device 1002 and the auxiliary storage device 1003.

The processor 1001 operates, for example, an operating system to control the entire computer. The processor 1001 may be configured with a central processing unit (CPU) including an interface with peripheral devices, a control device, an arithmetic unit, a register, and the like. For example, the control unit 140, the control unit 240, and the like described above may be realized by the processor 1001.

Further, the processor 1001 reads a program (program code), a software module, a data, or the like from at least one of the auxiliary storage device 1003 and the communication device 1004 into the storage device 1002 and executes various processes according to these. As the program, a program that causes a computer to execute at least some of the operations described in the above-described embodiment is used. For example, the control unit 140 of the base station apparatus 10 illustrated in Fig. 17 may be realized by a control program stored in the storage device 1002 and operated by the processor 1001. Further, for example, the control unit 240 of the terminal 20 illustrated in Fig. 18 may be realized by the control program stored in the storage device 1002 and operated by the processor 1001. Although it has been described that the various processes described above are executed by one processor 1001, the processes may be executed simultaneously or sequentially by two or more processors 1001. The processor 1001 may be mounted by one or more chips. It is noted that the program may be transmitted from the network via the above-mentioned telecommunication line.

The storage device 1002 is a computer-readable recording medium and may be configured with, for example, at least one of a read only memory (ROM), an erasable program ROM (EPROM), an electrically erasable programmable ROM (EEPROM), a random access memory (RAM), and the like. The storage device 1002 may be referred to as a register, a cache, a main memory (main storage device), or the like. The storage device 1002 can store a program (program code), a software module, or the like that can be executed to implement the communication method according to the embodiment of the present disclosure.

The auxiliary storage device 1003 is a computer-readable recording medium and may be configured with, for example, at least one of an optical disc such as a compact disc ROM (CD-ROM, a hard disk drive, a flexible disk, an optical magnetic disk (for example, a compact disc, a digital versatile disk, a Blu-ray (registered trademark) disk, a smart card, a flash memory (for example, a card, a stick, or a key drive), a floppy (registered trademark) disk, a magnetic strip, and the like. The storage medium described above may be, for example, a database, a server or other suitable medium including at least one of the storage device 1002 and the auxiliary storage device 1003.

The communication device 1004 is hardware (transmitting/receiving device) for communicating between computers via at least one of a wired network and a radio network, and is also referred to as, for example, a network device, a network controller, a network card, a communication module, or the like. The communication device 1004 may be configured to include, for example, a high frequency switch, a duplexer, a filter, a frequency synthesizer, and the like in order to realize at least one of frequency division duplex (FDD) and time division duplex (TDD). For example, a transmitting/receiving antenna, an amplifier unit, a transmitting/receiving unit, a transmission line interface, and the like may be realized by the communication device 1004. The transmitting/receiving unit may be implemented to be physically or logically separated from each other in the transmitting unit and the receiving unit.

The input device 1005 is an input device (for example, a keyboard, a mouse, a microphone, a switch, a button, a sensor, or the like) that accepts an input from the outside. The output device 1006 is an output device (for example, a display, a speaker, an LED lamp, or the like) that performs outputting to the outside. It is noted that the input device 1005 and the output device 1006 may have an integrated configuration (for example, a touch panel).

Further, each device such as the processor 1001 and the storage device 1002 is connected by the bus 1007 for communicating information. The bus 1007 may be configured by using a single bus or may be configured by using a different bus for each device.

Further, the base station apparatus 10 and the terminal 20 may be configured to include hardware of a microprocessor, a digital signal processor (DSP), an application specific integrated circuit (ASIC), a programmable logic device (PLD), a programmable logic device (FPGA), or the like, and some or all of functional blocks may be realized by the hardware. For example, the processor 1001 may be implemented using at least one of these hardware.

### (Supplement to Embodiment)

Although the embodiments of the invention have been described above, the disclosed inventions are not limited to such embodiments, and those skilled in the art will understand that there will be various modifications, changes, alterations, substitutions, and the like. Although the description has been made using specific numerical examples in order to promote the understanding of the invention, such numerical values are merely examples, and any appropriate value may be used unless otherwise specified. The classification of items in the above description is not essential to the invention, but matters described in two or more items may be used in combination if necessary, and matters described in one item may be applied to another item (as long as there is no contradiction). The boundary of the functional unit or the processing unit in the functional block diagram does not always correspond to the boundary of the physical component. The operation of the plurality of functional units may be performed physically by one component, or the operation of one functional unit may be performed physically by a plurality of components. With respect to the processing procedure described in the embodiment, the processing order may be changed as long as there is no contradiction. For the convenience of processing description, the base station apparatus 10 and the terminal 20 have been described using a functional block diagram, but such devices may be realized by hardware, software, or a combination thereof. Each of the software operated by the processor of the base station apparatus 10 according to the embodiment of the invention and the software operated by the processor of the terminal 20 according to the embodiment of the invention may be stored in a random access memory (RAM), a flash memory, a read-only memory (ROM), an EPROM, an EPROM, a register, a hard disk (HDD), a removable disk, a CD-ROM, a database, a server, or any other suitable storage medium.

Further, the notification of information is not limited to the aspects/embodiments described in the present disclosure and may be performed by using another method. For example, the notification of information may be performed by physical layer signaling (for example, downlink control information (DCI), uplink control information (UCI), higher layer signaling (for example, radio resource control (RRC) signaling, medium access (MAC) signaling), notification information (master information block (MIB), system information block (SIB)), other signals, or a combination thereof. Further, the RRC signaling may be referred to as an RRC message and may be, for example, an RRC connection setup message, an RRC connection reconstruction message, or the like.

Each aspect/embodiment described in the present disclosure may be applied to at least one of long term evolution (LTE), LTE-advanced (LTE-A), SUPER 3G, IMT-advanced, 4th generation mobility communication system (4G), 5th generation mobility communication system (5G), future radio access (FRA), new radio (NR), W-CDMA (registered trademark), GSM (registered trademark), CDMA2000, ultra mobile broadband (UMB), IEEE 802.11 (Wi-Fi (registered trademark)), LTE 802.16 (WiMAX (registered trademark)), IEEE 802.20, ultra-wideband (UWB), Bluetooth (registered trademark), a system utilizing other systems, and a next generation system that extends based on these systems. Further, a plurality of systems may be applied to a combination (for example, a combination of at least one of LTE and LTE-A and 5G).

The order of the processing procedures, sequences, flowcharts, and the like of each aspect/embodiment described in the present specification may be changed as long as there is no contradiction. For example, the methods described in the present disclosure represent elements of various steps using exemplary order, and are not limited to the particular order represented.

In some cases, a specific operation performed by the base station apparatus 10 in the present specification may be performed by an upper node. In a network configured with one or a plurality of the network nodes having the base station apparatus 10, it is obvious that various operations performed for communication with the terminal 20 can be performed by at least one of the base station apparatus 10 and network nodes (for example, MME or S-GW, and the like, but not limited to these) other than the base station apparatus 10. In the above description, the case where there is one network node other than the base station apparatus 10 is illustrated, but the other network node may be a combination (for example, MME and S-GW) of a plurality of other network nodes.

The information, signals, and the like described in the present disclosure can be output from an upper layer (or lower layer) to a lower layer (or upper layer). Inputting/outputting may be performed via a plurality of the network nodes.

The input/output information and the like may be stored in a specific location (for example, a memory) or may be managed by using a management table. The Information to be input/output may be overwritten, updated, or added. The output information and the like may be deleted. The input information and the like may be transmitted to another device.

The determination in the present disclosure may be made by a value (0 or 1) represented by 1 bit, may be made by a boolean value (Boolean: true or false), or may be made by comparison of numerical values (for example, comparison with a predetermined value).

Irrespective of as to which software is referred to as software, firmware, middleware, microcode, hardware description language, or other names, it is obvious that the software should be broadly interpreted as an instruction, an instruction set, a code, a code segment, a program code, a program, a subprogram, a software module, an application, a software application, a software package, a routine, a subroutine, an object, an executable file, an execution thread, a procedure, a function, or the like.

Further, the software, the instructions, the information, and the like may be transmitted and received via a transmission medium. For example, when the software is transmitted from a website, a server, or other remote source by using at least one of wired technology (a coaxial cable, an optical fiber cable, a twisted pair, a digital subscriber line (DSL), and the like) and radio technology (infrared, microwave, and the like), at least one of these wired and radio technologies is included within the definition of transmission medium.

The information, the signals, and the like described in the present disclosure may be represented using any of a variety of different techniques. For example, the data, the instructions, the commands, the information, the signals, the bits, the symbols, the chips, and the like that may be referred to throughout the above description may be represented by voltages, currents, electromagnetic waves, magnetic fields or magnetic particles, light fields or photons, or any combination thereof.

It is noted that the terms described in the present disclosure and the terms necessary for understanding the present disclosure may be replaced with terms having the same or similar meanings. For example, at least one of a channel and a symbol may be a signal (signaling). In addition, the signal may be a message. Further, the component carrier (CC) may be referred to as a carrier frequency, a cell, a frequency carrier, or the like.

The terms "system" and "network" used in the present disclosure are used interchangeably.

Further, the information, the parameters, and the like described in the present disclosure may be expressed by using an absolute value, may be expressed by using a relative value from a predetermined value, or may be expressed by using another corresponding information. For example, the radio resource may be one indicated by an index.

The names to be used for the above parameters are not limited in any respect. Furthermore, mathematical formulas and the like using these parameters may differ from those explicitly disclosed in the present disclosure. Since various channels (for example, the PUCCH, the PDCCH, and the like) and the information elements can be identified by any suitable name, and various names assigned to these various channels and information elements are not limitative names in any respect.

In the present disclosure, the terms such as the "base station (BS)", the "radio base station", the "base station apparatus", the "fixed station", the "NodeB", the "eNodeB (eNB)", the "gNodeB (gNB)", "access point", "transmission point", "reception point", "transmission/reception point", "cell", "sector", "cell group", "carrier", and "component carrier" may be used interchangeably. In some cases, base stations are referred to as terms such as macrocells, small cells, femtocells, and picocells.

The base station can accommodate one or a plurality of (for example, 3) cells. When the base station accommodates the plurality of cells, the entire coverage area of the base station can be divided into a plurality of smaller areas, each smaller area may be provided with communication services by a base station subsystem (for example, a small indoor base station (RRH: Remote Radio Head). The term "cell" or "sector" refers to some or all of the coverage area of at least one of a base station and a base station subsystem that performs communication services in this coverage.

In the present disclosure, the terms such as "mobile station (MS)", "terminal (user terminal)", "terminal (UE: User Equipment)", and "terminal" can be used interchangeably.

In some cases, the mobile stations may be referred to as subscriber stations, mobile units, subscriber units, radio units, remote units, mobile devices, radio devices, radio communication devices, remote devices, mobile subscriber stations, access terminals, mobile terminals, radio terminals, remote terminals, handsets, user agents, mobile clients, clients, or some other suitable terms by those skilled in the art.

At least one of the base station and the mobile station may be referred to as a transmission device, a reception device, a communication device, or the like. It is noted that at least one of the base station and the mobile station may be a device mounted on a moving body, a moving body itself, or the like. The moving body may be a vehicle (for example, a car, an airplane, or the like), an unmanned moving body (for example, a drone, a self-driving car, or the like), or a robot (manned or unmanned). It is noted that at least one of the base station and the mobile station also includes a device that does not necessarily move during communication operation. For example, at least one of the base station and the mobile station may be an internet of things (IoT) device such as a sensor.

Further, the base station in the present disclosure may be read by the terminal. For example, each aspect/embodiment of the present disclosure may be applied to a configuration in which communication between a base station and a terminal is replaced with communication between a plurality of terminals 20 (for example, the communication may be referred to as device-to-device (D2D), vehicle-to-everything (V2X), and the like). In this case, the terminal 20 may have the functions of the base station apparatus 10 described above. In addition, the terms such as "up" and "down" may be read as the terms (for example, "side") corresponding to communication between terminals. For example, an upstream channel, a downstream channel, and the like may be read as a side channel.

Similarly, the terminal in the present disclosure may be read as a base station. In this case, the base station may have the functions of the terminal described above.

The terms "determination" and "decision" used in the present disclosure may include a wide variety of operations. The "determination" and the "decision" may include, for example, judging, calculating, computing, processing, deriving, investigating, searching (looking up, search, and inquiry) (for example, searching in a table, a database or another data structure), and ascertaining being regarded as "determination" or "decision". Further, the "determination" and the "decision" may include receiving (for example, receiving information), transmitting (for example, transmitting information), input, output, and accessing (for example, accessing a data in a memory) being regarded as "determination" or "decision". In addition, the "determination" and the "decision" may include resolving, selecting, selecting, choosing, establishing, comparing, and the like being regarded as "determination" or "decision". That is, the "determination" and the "decision" may include some operation being regarded as "determination" and "decision". Further, the "determination (decision)" may be read as "assuming", "expecting", "considering", or the like.

The terms "connected", "coupled", or any variation thereof, denote any direct or indirect connecting or coupling between two or more elements, and the terms can include the presence of one or more intermediate elements between two "connected" or "coupled" elements. The connecting or the coupling between the elements may be a physical operation, a logical operation, or a combination thereof. For example, "connection" may be read as "access". When used in the present disclosure, the two elements can be considered to be "connected" or "coupled" to each other by using at least one of one or more wires, cables, and printed electrical connections and by using electromagnetic energy having wavelengths in the radio frequency domain, the microwave range, and light (both visible and invisible) range as some non-limiting and non-comprehensive examples.

The reference signal may be abbreviated as RS and may be referred to as a pilot according to an applied standard.

The phrase "based on" used in the present disclosure does not denote "based only on" unless otherwise stated. In other words, the phrase "based on" denotes both "based only on" and "at least based on".

Any referring to elements using denotations of "first" and "second" as used in the present disclosure does not generally limit the quantity or order of those elements. These denotations can be used in the present disclosure as a convenient way to distinguish between two or more elements. Therefore, referring to the first and second elements does not denote that only two elements can be adopted, or that the first element needs to precede the second element.

The "means" in the configuration of each of the above devices may be replaced with a "portion", a "circuit", a "device", or the like.

When "include", "including", and variations thereof are used in the present disclosure, these terms are intended to be as inclusive as the term "comprising". Furthermore, the term "or" used in the present disclosure is intended not to be "exclusive or".

The radio frame may be configured with one or a plurality of the frames in the time domain. One or the plurality of frames in the time domain may be referred to as a subframe. The subframe may further be configured with one or a plurality of slots in the time domain. The subframe may have a fixed time length (for example, 1 ms) that is independent of numerology.

The numerology may be a communication parameter applied to at least one of transmission and reception of a certain signal or a certain channel. The numerology may represent one of, for example, a subcarrier spacing (SCS), a bandwidth, a symbol length, a cyclic prefix length, a transmission time interval (TTI), the number of symbols per TTI, a radio frame configuration, a specific filtering process performed by a transceiver in the frequency domain, a specific windowing process performed by a transceiver in the time domain, and the like.

The slot may be configured with one or a plurality of symbols (orthogonal frequency division multiple (OFDM) access symbols, single carrier frequency division access (SC-FDMA) symbols, and the like) in the time domain. The slot may be a time unit based on numerology.

The slot may include a plurality of mini-slots. Each mini-slot may be configured with one or a plurality of the symbols in the time domain. Further, the mini-slot may be referred to as a sub slot. The mini-slot may be configured with a smaller number of symbols than the number of slots. A PDSCH (or PUSCH) transmitted in time units larger than the mini-slot may be referred to as a PDSCH (or PUSCH) mapping type A. A PDSCH (or PUSCH) transmitted by using the mini-slot may be referred to as PDSCH (or PUSCH) mapping type B.

All the radio frame, the subframe, the slot, the mini-slot, and the symbol represent the time units at the time of transmitting a signal. The radio frame, the subframe, the slot, the mini-slot, and the symbol may be used with different names corresponding thereto.

For example, one subframe may be referred to as a transmission time interval (TTI), a plurality of consecutive subframes may be referred to as TTI, and one slot or one mini-slot may be referred to as a TTI. That is, at least one of the subframe and the TTI may be a subframe (1 ms) in an existing LTE, may be a duration of shorter than 1 ms (for example, 1-13 symbols), or may be a duration of longer than 1 ms. It is noted that the unit representing TTI may be referred to as a slot, a mini-slot, or the like instead of a subframe. Further, one slot may be referred to as a unit time. The unit time may be different among the cells according to the numerology.

Herein, the TTI refers to, for example, a minimum time unit of scheduling in radio communication. For example, in the LTE system, scheduling of the base station allowing radio resources (frequency bandwidth that can be used in each terminal 20, transmission power, and the like) to be allocated to each terminal 20 in TTI units is performed. It is noted that the definition of the TTI is not limited to this.

The TTI may be a transmission time unit of a channel-encoded data packet (transport block), a code block, a code word, or the like or may be a processing unit of scheduling, link adaptation, or the like. It is noted that, when the TTI is given, the time interval (for example, the number of symbols) to which the transport block, the code block, the code word, and the like are actually mapped may be shorter than the TTI.

It is noted that, when one slot or one mini-slot is referred to as a TTI, one or more TTIs (that is, one or more slots or one or more mini-slots) may be the minimum time unit for scheduling. Further, the number of slots (number of mini-slots) constituting the minimum time unit for the scheduling may be controlled.

A TTI having a time length of 1 ms may be referred to as a typical TTI (TTI in LTE Rel. 8-12), a normal TTI, a long TTI, a typical subframe, a normal subframe, a long subframe, a slot, or the like. A TTI shorter than a typical TTI may be referred to as a shortened TTI, a short TTI, a partial TTI (partial or fractional TTI), a shortened subframe, a short subframe, a mini-slot, a subslot, a slot, or the like.

It is noted that a long TTI (for example, a typical TTI, a typical subframe, and the like) may be read as a TTI having a time length of more than 1 ms, and a short TTI (for example, a shortened TTI and the like) may be read as a TTI having having a TTI length of less than the TTI length of the long TTI and 1 ms or more.

The resource block (RB) is a resource allocation unit in the time domain and the frequency domain and may include one or a plurality of consecutive subcarriers in the frequency domain. The number of subcarriers included in the RB may be the same regardless of the numerology and may be, for example, 12. The number of subcarriers included in the RB may be determined based on the numerology.

Further, the time domain of the RB may include one or a plurality of the symbols and may have a length of one slot, one mini-slot, one subframe, or one TTI. Each of one TTI, one subframe, and the like may be configured with one or a plurality of the resource blocks.

It is noted that one or a plurality of the RBs may be referred to as a physical resource block (PRB), a subcarrier group (SCG), a resource element group (REG), a PRB pair, an RB pair, or the like.

Further, the resource block may be configured with one or a plurality of resource elements (REs). For example, one RE may be a radio resource area of one subcarrier and one symbol.

The bandwidth part (BWP) (which may also be referred to as a partial bandwidth or the like) may represent a subset of consecutive common RBs (common resources blocks) for a certain neurology in a certain carrier. Herein, the common RB may be specified by the index of the RB with respect to a common reference point of the carrier. The PRBs may be defined in a certain BWP and numbered within that BWP.

The BWP may include a BWP (UL BWP) for the UL and a BWP (DL BWP) for the DL. One or a plurality of the BWPs may be set in one carrier for the UE.

At least one of the set BWPs may be active, and the UE may not be assumed to transmit or receive a predetermined signal/channel outside the active BWP. It is noted that, "cell", "carrier" and the like in the present disclosure may be read as "BWP".

The above-mentioned structures of the radio frames, the subframes, the slots, the mini-slots, the symbols, and the like are merely examples. For example, the number of subframes included in a radio frame, the number of slots per subframe or radio frame, the number of mini-slots included in a slot, the number of symbols and RBs included in a slot or mini-slot, the number of subcarriers included in an RB, the number of symbols in a TTI, a symbol length, a cyclic prefix (CP) length, and the like can be variously changed.

In the present disclosure, when articles example, "a", "an", and "the" are added by translation in English, the disclosure may include plural nouns following these articles.

In the present disclosure, the term "A and B are different" may denote that "A and B are different from each other". It is noted that the term may denote that "each of A and B is different from C". The terms of "separated", "combined", and the like may be interpreted in the same meaning as "different".

Each aspect/embodiment described in the present disclosure may be used alone, may be used in combination, or may be switched and used according to the execution. Further, the notification (for example, the notification of "being X") of predetermined information is not limited to the explicit one, but the notification may be performed implicitly (for example, the notification of the predetermined information is not performed).

Although the present disclosure has been described in detail above, it is obvious to those skilled in the art that the present disclosure is not limited to the embodiments described in the present disclosure. The present disclosure may be implemented as amendments and modifications without departing from the spirit and scope of the present disclosure as determined by the description of the claims. Therefore, the description of the present disclosure is for the purposes of illustration and does not have any limiting meaning to the present disclosure.

### EXPLANATIONS OF LETTERS OR NUMERALS

- 10: BASE STATION APPARATUS

- 110: TRANSMITTING UNIT
- 120: RECEIVING UNIT
- 130: SETTING UNIT
- 140: CONTROL UNIT
- 20: TERMINAL
- 210: TRANSMITTING UNIT
- 220: RECEIVING UNIT
- 230: SETTING UNIT
- 240: CONTROL UNIT
- 1001: PROCESSOR
- 1002: STORAGE DEVICE
- 1003: AUXILIARY STORAGE DEVICE
- 1004: COMMUNICATION DEVICE
- 1005: INPUT DEVICE
- 1006: OUTPUT DEVICE

## Claims

1. A terminal, comprising:
a receiving unit configured to receive signals with the same beam in a plurality of component carriers; and
a control unit configured to update a QCL in the plurality of component carriers based on a new beam selected by a beam failure recovery procedure in a certain component carrier among the plurality of component carriers.

2. The terminal according to claim 1, wherein the plurality of component carriers are component carriers which are configured from the base station apparatus or component carriers of which carrier frequency is larger than a certain value.

3. The terminal according to claim 1 or 2, wherein the control unit is configured to measure candidate beams in the plurality of component carriers in beam searching of the beam failure recovery procedure.

4. A terminal, comprising:
a receiving unit configured to select a plurality of beams by performing beam searching in a beam failure recovery procedure; and
a transmitting unit configured to report the selected plurality of beams to the base station apparatus by a PRACH or an MAC CE.

5. A base station apparatus, comprising:
a transmitting unit configured to transmit signals with the same beam in a plurality of component carriers; and
a control unit configured to update a beam in the plurality of component carriers based on a new beam selected by a beam failure recovery procedure in a certain component carrier among the plurality of component carriers.

6. A beam failure recovery method executed by a terminal, the beam failure recovery method comprising steps of:
receiving signals with the same beam in a plurality of component carriers; and
updating a QCL in the plurality of component carriers based on a new beam selected by a beam failure recovery procedure in a certain component carrier among the plurality of component carriers.
